(19) Europäisches Patentamt
European Patent Office
Office européen des brevets

(11) **EP 4 530 575 A1**

(12) **EUROPEAN PATENT APPLICATION**
published in accordance with Art. 153(4) EPC

(43) Date of publication:
02.04.2025 Bulletin 2025/14

(21) Application number: 23811646.1

(22) Date of filing: 11.05.2023

(51) International Patent Classification (IPC):
*G01C 21/26* (2006.01)     *B60L 3/00* (2019.01)
*B60L 15/20* (2006.01)     *B60L 50/60* (2019.01)
*G08G 1/01* (2006.01)     *G08G 1/0969* (2006.01)
*G16Y 10/40* (2020.01)     *G16Y 20/20* (2020.01)
*G16Y 20/30* (2020.01)

(52) Cooperative Patent Classification (CPC):
B60L 3/00; B60L 15/20; B60L 50/60; G01C 21/26;
G08G 1/01; G08G 1/0969; G16Y 10/40;
G16Y 20/20; G16Y 20/30

(86) International application number:
PCT/JP2023/017797

(87) International publication number:
WO 2023/228772 (30.11.2023 Gazette 2023/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.05.2022 JP 2022083504

(71) Applicant: HONDA MOTOR CO., LTD.
Tokyo 107-8556 (JP)

(72) Inventors:
• NAKAMURA, Hidenobu
  Osaka-shi, Osaka 541-0041 (JP)
• KUBOTA, Akihide
  Osaka-shi, Osaka 541-0041 (JP)
• KUDO, Jun
  Wako-shi, Saitama 351-0188 (JP)
• SADANO, Hakaru
  Wako-shi, Saitama 351-0188 (JP)

(74) Representative: Weickmann & Weickmann
PartmbB
Postfach 860 820
81635 München (DE)

(54) **TRAVEL ENERGY ESTIMATING DEVICE, TRAVEL ENERGY ESTIMATING METHOD, AND COMPUTER PROGRAM**

(57) A travel energy estimating device includes: a route acquisition unit configured to acquire a route that is composed of a road link on which a target vehicle being an electric vehicle is planned to travel; a route division unit configured to divide the route into one or more sections, each section including a speed change prediction point at which a change in a travel speed of the target vehicle is expected, each section being composed of one or a plurality of road links; a speed model acquisition unit configured to acquire a speed model for each section, the speed model indicating a temporal transition of the travel speed of the target vehicle; and a travel energy estimation unit configured to estimate travel energy of the target vehicle during traveling on the route, based on the speed model acquired for each section.

FIG. 5

EP 4 530 575 A1

## Description

## TECHNICAL FIELD

The present disclosure relates to a travel energy estimating device, a travel energy estimating method, and a computer program. This application claims priority on Japanese Patent Application No. 2022-083504 filed on May 23, 2022, the entire content of which is incorporated herein by reference.

## BACKGROUND ART

In recent years, electric vehicles have been attracting attention against a background of constraints on the output of natural resources and growing interest in environment issues. Such an electric vehicle travels by driving an electric motor with electric power supplied from a battery such as a lithium ion battery.

Meanwhile, utilization of green power generated using renewable energy such as solar and wind power is considered important. In order to reduce $CO_2$ emissions by actively utilizing green power, it is necessary to maintain balance between green power and travel energy of electric vehicles. Therefore, it is important not only to predict the amount of green power to be generated but also to highly accurately estimate the travel energy of electric vehicles.

An electric vehicle has a shorter cruising range than a gasoline vehicle that travels by driving an engine using gasoline. Moreover, once the remaining power in the battery runs out and the vehicle becomes unable to travel (so-called power shortage), it is difficult to go to a charging station and purchase power, unlike gasoline. Therefore, it is also important to maintain traveling of the electric vehicle while preventing power shortage.

Conventionally, a notification device that determines whether or not charging is necessary, and notifies the determination result has been proposed (refer to PATENT LITERATURE 1, for example). In this notification device, in order to prevent power shortage, charging stations along a travel route to an arrival point are displayed on a display screen.

Meanwhile, a route planning device that estimates, for each of a plurality of drive modes, an amount of power to be consumed when an electric vehicle travels on a planned route, and displays an operation plan for each drive mode on a display device has been proposed (refer to PATENT LITERATURE 2, for example).

## CITATION LIST

## PATENT LITERATURE

PATENT LITERATURE 1: Japanese Laid-Open Patent Publication No. 2018-77062
PATENT LITERATURE 2: Japanese Laid-Open Patent Publication No. 2014-35295

## SUMMARY OF THE INVENTION

A travel energy estimating device according to an aspect of the present disclosure includes: a route acquisition unit configured to acquire a route that is composed of a road link on which a target vehicle being an electric vehicle is planned to travel; a route division unit configured to divide the route into one or more sections, each section including a speed change prediction point at which a change in a travel speed of the target vehicle is expected, each section being composed of one or a plurality of road links; a speed model acquisition unit configured to acquire a speed model for each section, the speed model indicating a temporal transition of the travel speed of the target vehicle; and a travel energy estimation unit configured to estimate travel energy of the target vehicle during traveling on the route, based on the speed model acquired for each section.

A travel energy estimating method according to another aspect of the present disclosure includes: acquiring, by a travel energy estimating device, a route that is composed of a road link on which a target vehicle being an electric vehicle is planned to travel; dividing, by the travel energy estimating device, the route into one or more sections, each section including a speed change prediction point at which a change in a travel speed of the target vehicle is expected, each section being composed of one or a plurality of road links; acquiring, by the travel energy estimating device, a speed model for each section, the speed model indicating a temporal transition of the travel speed of the target vehicle; and estimating, by the travel energy estimating device, travel energy of the target vehicle during traveling on the route, based on the speed model acquired for each section.

A computer program according to another aspect of the present disclosure causes a computer to function as: a route acquisition unit configured to acquire a route that is composed of a road link on which a target vehicle being an electric vehicle is planned to travel; a route division unit configured to divide the route into one or more sections, each section including a speed change prediction point at which a change in a travel speed of the target vehicle is expected, each section being composed of one or a plurality of road links; a speed model acquisition unit configured to acquire a speed model for each section, the speed model indicating a temporal transition of the travel speed of the target vehicle; and a travel energy estimation unit configured to estimate travel energy of the target vehicle during traveling on the route, based on the speed model acquired for each section.

## BRIEF DESCRIPTION OF DRAWINGS

FIG. 1 shows an entire configuration of a travel energy estimation system according to an embodiment of the present disclosure.

FIG. 2 is a block diagram showing an example of a configuration of a traffic information providing server according to the embodiment of the present disclosure.

FIG. 3 is a block diagram showing an example of a configuration of an in-vehicle device according to the embodiment of the present disclosure.

FIG. 4 is a block diagram showing an example of a configuration of a travel energy estimation server according to the embodiment of the present disclosure.

FIG. 5 shows an example of a speed model of a guide section in which an upstream guide is a right or left turn point.

FIG. 6 shows an example of a speed model of a guide section in which an upstream guide is a traffic signal installation point.

FIG. 7 shows an example of a speed model of a guide section in which an upstream guide and a downstream guide do not correspond to either a right or left turn point or a traffic signal installation point.

FIG. 8 shows an example of a speed model in which an upstream guide does not correspond to either a right or left turn point or a traffic signal installation point, and a downstream guide corresponds to a traffic signal installation point.

FIG. 9 illustrates an example of a procedure for creating a speed model for one guide section by combining a plurality of speed models.

FIG. 10 illustrates an example of a procedure for creating a speed model for one guide section by combining a plurality of speed models.

FIG. 11 illustrates an example of a procedure for creating a speed model for one guide section by combining a plurality of speed models.

FIG. 12 is a sequence diagram showing an example of processing of a travel energy estimation system according to the embodiment of the present disclosure.

FIG. 13 shows an example of a route searched by a travel energy estimation server 5.

FIG. 14 shows an enlarged view of a part, surrounded by a broken line circle, of the searched route shown in FIG. 13.

FIG. 15 shows an example of guides that are set on a searched route through a guide section division process.

FIG. 16 shows data of guide sections generated by a guide section division process.

FIG. 17 shows an example of route information, travel energy information, and power consumption rate information displayed on a display.

FIG. 18 is a flowchart showing a speed model calculation process (step S17 in FIG. 12) in detail.

FIG. 19 shows a speed change based on a speed model, calculated by a travel energy estimation server, of a target vehicle during traveling on a searched route.

FIG. 20 shows a speed change when a target vehicle actually travels on the same searched route as that shown in FIG. 19.

## DETAILED DESCRIPTION

[Problems to be solved by the present disclosure]

As described above, from the viewpoint of actively utilizing green power and preventing power shortage while an electric vehicle is traveling, it is necessary to highly accurately estimate the travel energy when the electric vehicle is traveling.

The notification device described in PATENT LITERATURE 1 does not specifically disclose a travel energy estimating method.

The route planning device described in PATENT LITERATURE 2 assumes drive modes, such as a sport mode, an eco mode, and a normal mode, which are classified according to an upper-limit value of at least one of a speed and an acceleration, and estimates power consumption (travel energy) for each drive mode.

However, when an electric vehicle actually travels on a road, the electric vehicle may be affected by traffic conditions, etc., and it may be difficult for the electric vehicle to travel according to a drive mode assumed in advance. Therefore, there may be a difference between the estimated travel energy and the actual travel energy.

Meanwhile, in the conventional travel route search method, distance and time are defined as a cost for each of road links, and a travel route having the minimum cost is obtained through calculation. Here, road links are network data used to search for travel routes of vehicles, and are stored in a map database. A road link generally refers to a directional road that is delimited at a point where the road attribute changes, such as a branch point like an intersection, a change point between an expressway and a local road, or an entrance/exit of a tunnel.

On the other hand, consideration has been given to calculating travel energy of an electric vehicle during traveling on a route, in units of road links, similarly to route search. In other words, it has been considered that travel energy of an electric vehicle can be calculated with a certain degree of accuracy by calculating a predicted travel speed of the electric vehicle in units of road links, and estimating travel energy by using the predicted travel speed.

However, the method for estimating travel energy in units of road links does not provide accuracy required for a purpose of actively utilizing green power, e.g., a specific purpose such as supplying power from an electric vehicle to a power system.

The present inventors have conducted an intensive study, and have come up with an idea that, assuming that acceleration or deceleration occurs in units of road links, the method for estimating travel energy in units of road links is not appropriate for more accurately estimating travel energy.

For example, if a travel speed of an electric vehicle is predicted by averaging the travel speeds of a plurality of vehicles for each road link, acceleration or deceleration will be expressed by a difference in speed between road links. However, in such an expression method, it is difficult to accurately express acceleration or deceleration caused by stop or start that is a dominant factor in energy consumption.

Moreover, even if acceleration or deceleration is expressed for each road link, stop of a vehicle due to a red light of a traffic signal occurs, in most cases, after the vehicle has traveled a plurality of travel links. Therefore, road-link-based division unnecessarily divides the expression, which may result in an inefficient, complicated expression. Specifically, road links are generated based on points with branches, for the purpose of route calculation. In an urban area or the like having many branch points, the distance of each road link is less than 100 m in many cases. Although a vehicle traveling at 30 km/h takes about 12 seconds to travel 100 m, it is unlikely that the vehicle stops every 12 seconds or so. It is normal for the vehicle to stop every several tens of seconds due to a traffic signal.

Since acceleration or deceleration that has the greatest influence on travel energy of an electric vehicle does not occur in units of road links, the present inventors have found that it is possible to efficiently perform highly accurate energy calculation by setting a unit for acceleration or deceleration that is different from the road link unit.

The present disclosure has been made in view of the above circumstances, and it is an object of the present disclosure to provide a travel energy estimating device, a travel energy estimating method, and a computer program that can highly accurately estimate travel energy of an electric vehicle during traveling on a route.

[Effect of the present disclosure]

According to the present disclosure, it is possible to highly accurately estimate travel energy of an electric vehicle during traveling on a route.

[Definition of terms such as processor]

An embodiment of the present disclosure described below may be implemented as a device, a system, a method, an integrated circuit, a computer program, a computer-readable non-transitory recording medium, or any selective combination thereof.

The recording medium may be volatile or non-volatile. The device may be composed of a plurality of individual devices. If the device is composed of a plurality of individual devices, these devices may be disposed in one housing, or may be separately disposed in two or more separate housings.

A processor (control unit 30, 50, 80, etc., described below) may be a semiconductor integrated circuit including, for example, a central processing unit (CPU). The processor may be implemented as at least one microprocessor or microcontroller.

The processor may also be implemented as an FPGA (Field Programmable Gate Array), a GPC (Graphics Processing Unit), an ASIC (Application Specific Integrated Circuit), or an ASSP (Application Specific Standard Product), each being equipped with a CPU, or a combination of two or more circuits selected from them.

The processor loads, into a RAM (Ramdom Acsess Memory), a computer program describing commands related to at least one process and stored in a ROM (Read Only Memory), and executes the computer program, thereby implementing a desired process.

The RAM provides a work area into which a control program stored in the ROM is temporarily loaded during boot-up. The RAM may not necessarily be a single storage medium, and may be a set of a plurality of storage media.

The processor may serve as various function units according to the kinds of commands (computer programs) to be executed.

For example, the processor serves as a "calculation unit" for information X when executing a program for calculating the information X, serves as an "acquisition unit" for information X when executing a program for acquiring the information X, and serves as a "generation unit" for information X when executing a program for generating the information X.

The "acquisition unit" as a function unit of the processor may calculate or generate the information X by itself, or may receive the information X from another integrated circuit that has calculated or generated the information X.

That is, the "acquisition" in the case where the processor executes predetermined commands includes: a case where a certain integrated circuit calculates or generates any information by itself; and a case where another integrated circuit calculates or generates any information, and this information is inputted to the certain integrated circuit. Accordingly, the "acquisition unit" in this embodiment is a broader concept including the "calculation unit" and the "generation unit".

The ROM is, for example, a writable memory (e.g., PROM), a rewritable memory (e.g., flash memory), or a read-only memory.

The ROM stores therein a program that controls the operation of the processor. The ROM may not necessarily be a single storage medium, and may be a set of a plurality of storage media. A part of the set of the plurality of storage media may be a removable memory.

[Outline of embodiment of the present disclosure]

First, the outline of embodiments of the present disclosure is listed and described.

(1) A travel energy estimating device according to an embodiment of the present disclosure includes: a route acquisition unit configured to acquire a route that is composed of a road link on which a target vehicle being an electric vehicle is planned to travel; a route division unit configured to divide the route into one or more sections, each section including a speed change prediction point at which a change in a travel speed of the target vehicle is expected, each section being composed of one or a plurality of road links; a speed model acquisition unit configured to acquire a speed model for each section, the speed model indicating a temporal transition of the travel speed of the target vehicle; and a travel energy estimation unit configured to estimate travel energy of the target vehicle during traveling on the route, based on the speed model acquired for each section.

According to this configuration, the route is divided into one or more sections each being composed of one or a plurality of road links, on the basis of the speed change prediction point. Therefore, the section length is ensured to be always equal to or larger than the road link length, and each section can be configured to include a speed change prediction point. Therefore, the route need not be divided more than necessary, and can be divided into sections in which the travel energy can be highly accurately estimated. In addition, the speed model is provided for each section including a speed change prediction point. Therefore, an event of a speed change such as acceleration or deceleration of the target vehicle, which occurs at the point or in the section, can be reflected in the speed model. Since the travel energy is estimated based on the speed model in which the event of the speed change is reflected, it is possible to highly accurately estimate the travel energy of the target vehicle being an electric vehicle during traveling on the route.

(2) In the above (1), the speed change prediction point may include a target point at which a driver of the target vehicle is notified of guidance on the route.

For example, a route guidance system such as a car navigation system usually performs, for the driver, guidance (notification) about a point where the speed of the vehicle is expected to change, upstream of the point by voice or the like. Therefore, dividing the route into sections such that each section includes such a point allows highly accurate estimation of the travel energy of the target vehicle during traveling on the route.

(3) In the above (1) or (2), the speed change prediction point may include a traffic signal installation point.

At a point where a traffic signal is installed, events such as deceleration, stop, and acceleration of the target vehicle continuously occur. Therefore, using the speed model obtained by modeling such events allows highly accurate estimation of the travel energy.

(4) In the above (3), the speed model acquisition unit may calculate a first speed model indicating that the target vehicle will start after stopping, in the section including a traffic signal installation point at which the target vehicle is expected to stop due to a red light.

According to this configuration, the event of the speed change of the target vehicle in the section including the point where a traffic signal is installed can be generalized and modeled. Therefore, the travel energy can be estimated by a simple method.

(5) In the above (4), the first speed model may indicate that the target vehicle decelerates from a first speed to a speed of 0, maintains the speed of 0 for a predetermined time, and thereafter accelerates from the speed of 0 to a second speed.

According to this configuration, the event of the speed change of the target vehicle in the section including the point where a traffic signal is installed can be generalized and modeled. Therefore, the travel energy can be estimated by a simple method.

(6) In the above (5), at least one of the first speed and the second speed may indicate a typical travel speed of vehicles traveling in the section.

According to this configuration, the speed model can be calculated by using, for example, the typical travel speed statistically calculated, such as an average speed of vehicles traveling in the section. Therefore, the speed model based on the actual travel speed can be calculated, whereby the travel energy can be highly accurately estimated.

(7) In the above (5) or (6), the travel energy estimating device may further include a speed correction unit configured to correct at least one of the first speed and the second speed, based on regulation information that regulates traveling of the target vehicle on the route.

According to this configuration, each of the speeds used for calculating the speed model can be corrected based on the regulation information. Therefore, the speed model can be calculated in consideration of the regulation information, whereby the travel energy can be highly accurately estimated.

(8) In any one of the above (4) to (7), the speed model acquisition unit may determine, among a plurality of sections respectively including a plurality of traffic signal installation points at which signal light indications of traffic signals are synchronized, a section including a traffic signal installation point at which the target vehicle is expected to stop due to a red light, based on a parameter that defines the signal light indications.

According to this configuration, for example, among a plurality of traffic signals whose offsets of signal light indication are synchronized, a traffic signal installation point at which the target vehicle is expected to stop can be estimated. Therefore, only for a traffic signal installation point at which the target vehicle is expected to stop, a speed model in which the target vehicle stops at this point can be calculated, while for a traffic signal installation point at which the target vehicle is not expected to stop, a speed model in which the target vehicle passes this point without stopping can be calculated. Thus, the travel energy can be highly precisely estimated. Instead of a plurality of traffic signals the offsets of which are synchronized, for example, a plurality of traffic signals the other traffic signal parameters (e.g., cycles of signal light indication) of which are synchronized may be used.

(9) In any of the above (1) to (8), the speed change prediction point may include a right or left turn point at which the target vehicle turns right or left.

At a right or left turn point, events such as deceleration and acceleration of the target vehicle continuously occur. Therefore, using the speed model obtained by modeling such events allows highly accurate estimation of the travel energy.

(10) In the above (9), the speed model acquisition unit may calculate a second speed model indicating deceleration and acceleration of the target vehicle in the section including the right or left turn point.

According to this configuration, the event of the speed change of the target vehicle in the section including the right or left turn point can be generalized and modeled. Therefore, the travel energy can be estimated by a simple method.

(11) In the above (10), the second speed model may indicate that the target vehicle decelerates from a third speed to a fourth speed, and thereafter accelerates from the fourth speed to a fifth speed.

According to this configuration, the event of the speed change of the target vehicle in the section including the right or left turn point can be generalized and modeled. Therefore, the travel energy can be estimated by a simple method.

(12) In the above (11), at least one of the third speed and the fifth speed may indicate a typical travel speed of vehicles traveling in the section.

According to this configuration, for example, the speed model can be calculated by using, for example, the typical travel speed statistically calculated, such as an average speed of vehicles traveling in the section. Therefore, the speed model based on the actual travel speed can be calculated, whereby the travel energy can be highly accurately estimated.

(13) In the above (11) or (12), the travel energy estimating device may further include a speed correction unit configured to correct any of the third speed, the fourth speed, and the fifth speed, based on regulation information that regulates traveling of the target vehicle on the route.

According to this configuration, each of the speeds used for calculating the speed model can be corrected based on the regulation information. Therefore, the speed model can be calculated in consideration of the regulation information, whereby the travel energy can be highly accurately estimated.

(14) In any of the above (1) to (12), the speed model acquisition unit may calculate a third speed model including a temporal transition of speed in which the speed of the target vehicle is maintained at a sixth speed, in the section including a speed change prediction point that does not correspond to either a traffic signal installation point or a right or left turn point at which the target vehicle turns right or left.

According to this configuration, it is possible to generalize and model an event such as a change in travel speed in a section including a point at which attention needs to be paid during traveling through the point, which is likely to affect traveling of the target vehicle, and at which a sudden acceleration or deceleration is highly likely to occur when the target vehicle passes (e.g., a point at which the road type changes, a road merging point, a road branching point, etc.). Therefore, the travel energy can be estimated by a simple method.

(15) According to the above (14), in the section including the speed change prediction point that does not correspond to either the traffic signal installation point or the right or left turn point at which the target vehicle turns right or left, if an end of the section is a traffic signal installation point, the speed model acquisition unit may calculate the third speed model indicating that the target vehicle stops at the end.

According to this configuration, it is possible to generalize and model an event of speed change of the target vehicle when the target vehicle stops due to a traffic signal at an end of the section. Thus, the travel energy can be estimated by a simple method.

(16) In the above (15), the third speed model may indicate that the target vehicle decelerates from the sixth speed to the speed of 0 until reaching the end of the section, and thereafter maintains the speed of 0 for a predetermined time.

According to this configuration, if the target vehicle stops due to a traffic signal at the end of the section, deceleration and acceleration of the target vehicle continuously occur. Therefore, the event of the speed change of the target vehicle in this section can be generalized and modeled. Thus, the travel energy can be estimated by a simple method.

(17) In the above (16), the sixth speed may indicate a typical travel speed of vehicles traveling in the section.

According to this configuration, for example, the speed model can be calculated by using, for example, the typical travel speed statistically calculated, such as an average speed of vehicles traveling in the section. Therefore, the speed model based on the actual travel speed can be calculated, whereby the travel energy can be highly accurately estimated.

(18) In the above (17), the travel energy estimating device may further include a speed correction unit configured to correct the sixth speed, based on regulation information that regulates traveling of the target vehicle on the route.

According to this configuration, each of the speeds used for calculating the speed model can be corrected based on the regulation information. Therefore, the speed model can be calculated in consideration of the regulation information, whereby the travel energy can be highly accurately estimated.

(19) In any of the above (7), (13), and (18), the regulation information may include at least one of information on an event to be held during traveling of the target vehicle, information that regulates traveling on a road, weather information, traffic jam information, travel time information, and map information.

According to this configuration, each of the speeds used for calculating the speed model can be corrected in consideration of various kinds of specific regulation information. Therefore, a more accurate speed model can be calculated.

(20) In any one of the above (1) to (19), the speed model acquisition unit may calculate, for each section, the speed model according to the type of the road included in the section.

Since the number of accelerations, decelerations, or stops, the travel speed, and the like differ between a local road and an expressway, the speed model can be calculated in consideration of them.

(21) In any of the above (14) to (19), the speed model acquisition unit may calculate the third speed model in the section including an expressway.

Since no traffic signals exist on an expressway, the travel energy can be highly accurately estimated by calculating the third speed model.

(22) In any one of the above (4) to (8), the speed model acquisition unit may calculate the first speed model in the section including a local road.

Since traffic signal installation points exist on a local road, the travel energy can be highly accurately estimated by calculating the speed model with the traffic signal installation points being assumed.

(23) In any one of the above (1) to (22), the speed model acquisition unit may determine an acceleration at which the speed of the target vehicle is to be changed, according to a driver of the target vehicle, and acquire the speed model indicating the temporal transition of the travel speed of the target vehicle based on the determined acceleration.

A driver who is cautious in driving generally drives at a low acceleration without frequent sudden accelerations and decelerations. Thus, accelerations at stop and start of the target vehicle vary among drivers. Calculating a speed model based on the acceleration according to the driver's characteristics allows the travel energy to be highly accurately estimated for each driver.

(24) In any one of the above (1) to (23), the route acquisition unit may calculate a route that minimizes a travel distance of the target vehicle from a first point to a second point, as a route on which the target vehicle is planned to travel.

According to this configuration, for example, travel energy when the target vehicle travels on a route in which the travel distance from a departure point to an arrival point is minimized, can be highly accurately estimated.

(25) According to any of the above (1) to (23), the route acquisition unit may select one route from among a plurality of routes for the target vehicle from a first point to a second point, based on the travel energy estimated by the travel energy estimation unit.

According to this configuration, for example, it is possible to select, from among a plurality of routes, a route having the minimum travel energy from a departure point to an arrival point, as a travel route of a target vehicle. This allows the target vehicle to travel in an environmentally friendly manner.

(26) In any one of the above (1) to (25), based on at least one of a heading direction of the target vehicle and presence/absence of a traffic signal at the speed change prediction point, the speed model acquisition unit may acquire a speed model for the section including the speed change prediction point.

According to this configuration, an appropriate speed model for each section composed of one or a plurality of road links can be acquired, considering the heading direction of the target vehicle and presence/absence of a traffic signal at the speed change prediction point. For example, at a point where a traffic signal is installed, a speed model obtained by modeling a speed change caused by stopping due to the traffic signal can be acquired. At a point where a traffic signal is not installed but the heading direction changes, a speed model obtained by modeling a speed change due to the change in the heading direction can be acquired. That is, the speed of the target vehicle can be modeled as a speed model in units of sections each having one or more road links. Therefore, for example, even if the target vehicle is traveling in an area where short-distance road links are continuously connected, such as an urban area, it is possible to estimate the travel energy in units of distances at which acceleration or deceleration that has the greatest influence on the travel energy occurs. That is, the travel energy can be estimated using the units of sections (units of distances) that are not excessively subdivided. In addition, since the travel speed of the target vehicle is expressed by the speed model, acceleration or deceleration that has the greatest influence on the travel energy can be appropriately expressed by a simple method. Thus, the travel energy can be highly accurately estimated, based on the speed model that is modeled with less parameters.

(27) A travel energy estimating method according to another embodiment of the present disclosure includes: acquiring, by a travel energy estimating device, a route that is composed of a road link on which a target vehicle being an electric vehicle is planned to travel; dividing, by the travel energy estimating device, the route into one or more sections, each section including a speed change prediction point at which a change in a travel speed of the target vehicle is expected, each section being composed of one or a plurality of road links; acquiring, by the travel energy estimating device, a speed model for each section, the speed model indicating a temporal transition of the travel speed of the target vehicle; and estimating, by the travel energy estimating device, travel energy of the target vehicle during traveling on the route, based on the speed model acquired for each section.

This configuration includes, as steps, the characteristic processes in the travel energy estimating device. Therefore, effects similar to those of the travel energy estimating device can be exhibited.

(28) A computer program according to another embodiment of the present disclosure causes a computer to function as: a route acquisition unit configured to acquire a route that is composed of a road link on which a target vehicle being an electric vehicle is planned to travel; a route division unit configured to divide the route into one or more sections, each section including a speed change prediction point at which a change in a travel speed of the target vehicle is expected, each section being composed of one or a plurality of road links; a speed model acquisition unit configured to acquire a speed model for each section, the speed model indicating a temporal transition of the travel speed of the target vehicle; and a travel energy estimation unit configured to estimate travel energy of the target vehicle during traveling on the route, based on the speed model acquired for each section.

According to this configuration, the computer can be caused to function as the travel energy estimating device. Therefore, effects similar to those of the travel energy estimating device can be exhibited.

[Detailed description of embodiment of the present disclosure]

Hereinafter, an embodiment of the present disclosure will be described with reference to the drawings. The embodiment described below is a specific example of the present disclosure. The numerical expressions, numerical values, shapes, materials, components, arrangement positions and connection forms of components, steps, order of steps, and the like shown in the embodiment below are merely examples, and do not limit the present disclosure. In addition, among the components in the embodiment below, components that are not described in the independent claims are optionally includable components. Each drawing is a schematic drawing, and is not necessarily exact.

The same components are denoted by the same reference signs. Since those components have similar functions and names, descriptions thereof are omitted as appropriate.

[Overall configuration of travel energy estimation system]

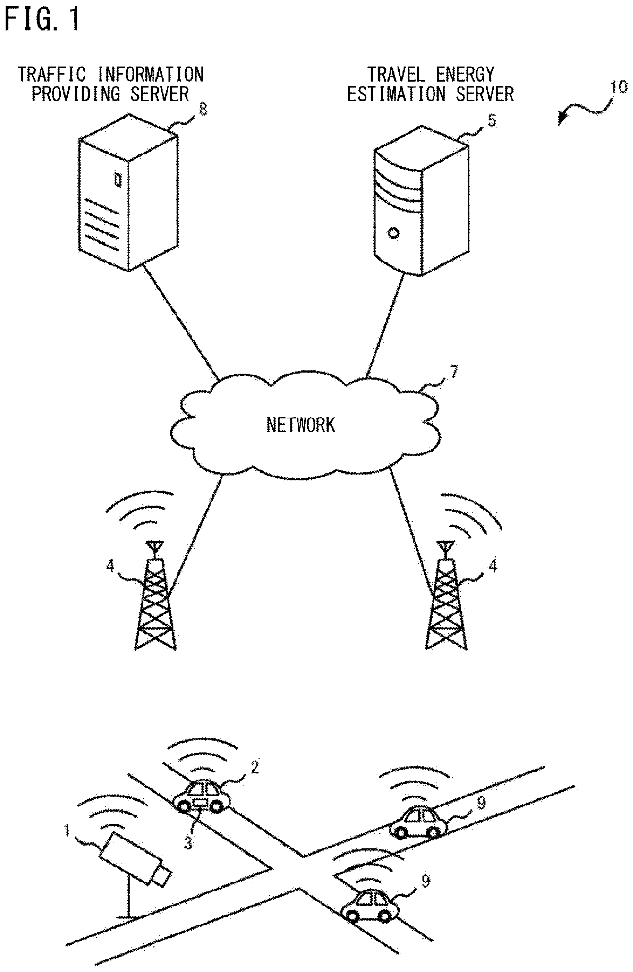

FIG. 1 shows an overall configuration of a travel energy estimation system according to an embodiment of the present disclosure.

A travel energy estimation system 10 according to the present embodiment is a system for estimating travel energy of an electric vehicle during traveling on a predetermined route. The travel energy estimation system 10 includes a detector 1, a target vehicle 2, probe vehicles 9, base stations 4, a travel energy estimation server 5, and a traffic information providing server 8.

The detector 1 has a wireless communication function, and is configured to include various sensors such as an image-type vehicle sensor installed on a road or a LiDAR (Light Detection and Ranging, or Laser Imaging Detection and Rang).

The target vehicle 2 is an electric vehicle that travels by driving an electric motor using power supplied from a battery, and is a vehicle whose travel energy is to be estimated.

The target vehicle 2 includes an in-vehicle device 3 having a wireless communication function. The detailed configuration of the in-vehicle device 3 will be described later.

The probe vehicle 9 is a vehicle having a wireless communication function, and has a function of transmitting probe information including information on the position thereof, and information on the time when the probe vehicle 9 passed the position.

Examples of the target vehicle 2 and the probe vehicle 9 include not only ordinary passenger cars but also public vehicles such as route buses and emergency vehicles. The target vehicle 2 and the probe vehicle 9 are not limited to four-wheeled vehicles, and may be two-wheeled vehicles (motorcycles).

The base station 4 connects devices that perform wireless communication (detector 1, target vehicle 2, probe vehicle 9, etc.) and a network 7.

The base station 4 and a relay device (not shown) such as a repeater are each implemented as, for example, a transport device capable of providing SDN (Software-Defined Networking). The network virtualization technology represented by the above SDN is the basic concept of 5G (5th-generation mobile communication system). Therefore, the wireless communication system of the present embodiment is implemented as 5G, for example. However, the wireless communication system is not limited to 5G, and may be an ITS (Intelligent Transport Systems) wireless communication system or the like.

The travel energy estimation server 5 estimates travel energy of the target vehicle 2 during traveling on a predetermined route, based on a speed model representing an estimated travel speed of the target vehicle 2, and transmits the estimation result to the target vehicle 2 via the network 7 and the base station 4. The detailed configuration of the travel energy estimation server 5 will be described later.

The traffic information providing server 8 is a server installed in a traffic control center or the like, and calculates a typical travel speed of the probe vehicle 9, based on probe information of the probe vehicle 9 traveling on the route (road). In addition, the traffic information providing server 8 detects traffic accidents, etc., that occur on the route, based on detection information of the detector 1. The detailed configuration of the traffic information providing server 8 will be described later.

[Configuration of traffic information providing server 8]

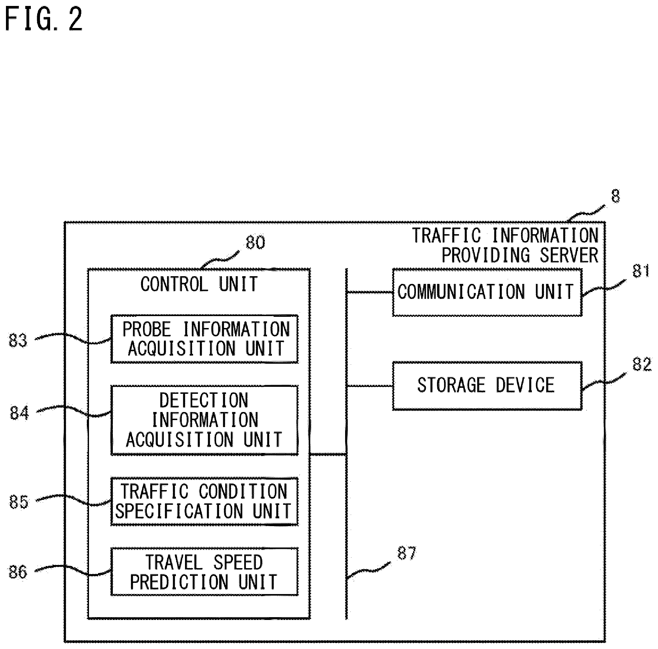

FIG. 2 is a block diagram showing an example of the configuration of the traffic information providing server 8 according to the embodiment of the present disclosure.

As shown in FIG. 2, the traffic information providing server 8 includes a control unit 80 which is a processor including a CPU (Central Processing Unit) and the like, a communication unit 81, and a storage device 82. The control unit 80, the communication unit 81, and the storage device 82 are connected to each other via a bus 87.

The communication unit 81 includes a communication module for performing communication with the other devices via the network 7. The communication unit 81 transmits information given from the control unit 80 to another device via the network 7, and provides the control unit 80 with information received via the network 7.

The storage device 82 is implemented as a volatile memory element such as an SRAM (Static RAM) or a DRAM (Dynamic RAM), a non-volatile memory element such as a flash memory or an EEPROM (Electrically Erasable Programmable Read Only Memory), a magnetic storage device such as a hard disk, or the like. The storage device 82 stores therein computer programs to be executed in the control unit 80, data generated during execution of the computer programs in the control unit 80, and the like.

The control unit 80 includes a probe information acquisition unit 83, a detection information acquisition unit 84, a traffic condition specification unit 85, and a travel speed prediction unit 86, as functional processing units that are realized by reading out the computer programs stored in the storage device 82 in advance, and executing the programs.

The probe information acquisition unit 83 acquires probe information from a plurality of probe vehicles 9 via the communication unit 81. The probe information acquisition unit 83 writes the acquired probe information into the storage device 82.

The detection information acquisition unit 84 acquires detection information from the detector 1 via the communication unit 81. The detection information acquisition unit 84 acquires detection information indicating, for example, the speed, presence/absence, position, etc., of a vehicle detected by the detector 1. The detection information acquisition unit 84 writes the acquired detection information into the storage device 82.

The traffic condition specification unit 85 acquires route information from the travel energy estimation server 5 to the arrival point of the target vehicle 2 via the communication unit 81. In addition, the traffic condition specification unit 85 reads out the detection information from the storage device 82. Based on the route information and the detection information, the traffic condition specification unit 85 specifies traffic conditions on the route indicated by the route information. Specifically, the traffic condition specification unit 85 detects a traffic accident that has occurred on the route, and specifies the details of the traffic accident including the location, range, and severity of the traffic accident. The traffic condition specification unit 85 can detect a traffic accident by using, for example, image processing or the like.

In addition to traffic accident, the traffic condition specification unit 85 may specify details of traffic jam including the location, range, and degree of the traffic jam, or may detect a location where a sudden deceleration of a vehicle occurs. Moreover, the traffic condition specification unit 85 may detect the location of a fallen object, a rockfall, etc.

The traffic condition specification unit 85 may detect them by using not only the detection information but also the probe information.

The traffic condition specification unit 85 reads out: details of traffic signals, including cycles and offsets, installed at intersections, etc., on the route; the shape of each road (e.g., gradient, curvature of a curve, etc.); and traffic rules such as the speed limit on each road, from the storage device 82 in which these pieces of information are stored in advance, or acquires these pieces of information from an external server. The details of traffic signals include information indicating a set of a plurality of traffic signals between which offsets of signal light indication are synchronized. The details of traffic signals may include information indicating a set of a plurality of traffic signals between which cycles of signal light indication are synchronized.

The traffic condition specification unit 85 creates traffic condition information indicating details of traffic accidents, details of traffic jams, sudden deceleration occurrence positions, positions of fallen objects, positions of fallen rocks, details of traffic signals, road shapes, and traffic rules. The traffic condition information is an example of regulation information that regulates traveling of the target vehicle 2 on the route.

The traffic condition specification unit 85 may include, in the traffic condition information, information on an event such as a concert held near the route indicated by the route information, weather information on an area including the route, information on route travel time, etc. The traffic condition specification unit 85 may acquire the event information and the weather information from an external server. The travel time information is calculated by the travel speed prediction unit 86 described later.

The traffic condition specification unit 85 transmits the created traffic condition information to the travel energy estimation server 5 via the communication unit 81.

The travel speed prediction unit 86 reads out the probe information acquired by the probe information acquisition unit 83 from the storage device 82, and predicts a typical travel speed of vehicles, based on the read probe information. The travel speed is calculated in units of road sections (e.g., road links) set in advance. For example, the travel speed prediction unit 86 calculates a travel time in each road section for each vehicle, based on the probe information, and calculates a travel speed of the vehicle in each road section, based on the travel time and the road section length. The travel speed prediction unit 86 subjects the travel speeds of a plurality of vehicles to a statistical process (e.g., calculation of an average value or a mode value of travel speeds), thereby calculating a typical travel speed of the vehicles in each road section. Road links on a road map may be regarded as road sections. A road section may be set for each section of a predetermined distance on the road. The travel speed prediction unit 86 may predict the legal speed limit as the typical travel speed for each road section. For example, if a travel speed cannot be obtained by the statistical process on a road link having little traffic, the travel speed prediction unit 86 may predict the legal speed limit as the typical travel speed.

The travel speed prediction unit 86 acquires route information from the travel energy estimation server 5 to the arrival point of the target vehicle 2 via the communication unit 81, and determines a typical travel speed of vehicles for each road section in the route indicated by the route information, as a predicted travel speed of the target vehicle 2 during traveling on the route. The travel speed prediction unit 86 transmits speed information indicating the determined predicted travel speed of the target vehicle 2 for each road section, to the travel energy estimation server 5 via the communication unit 81.

[Configuration of in-vehicle device 3]

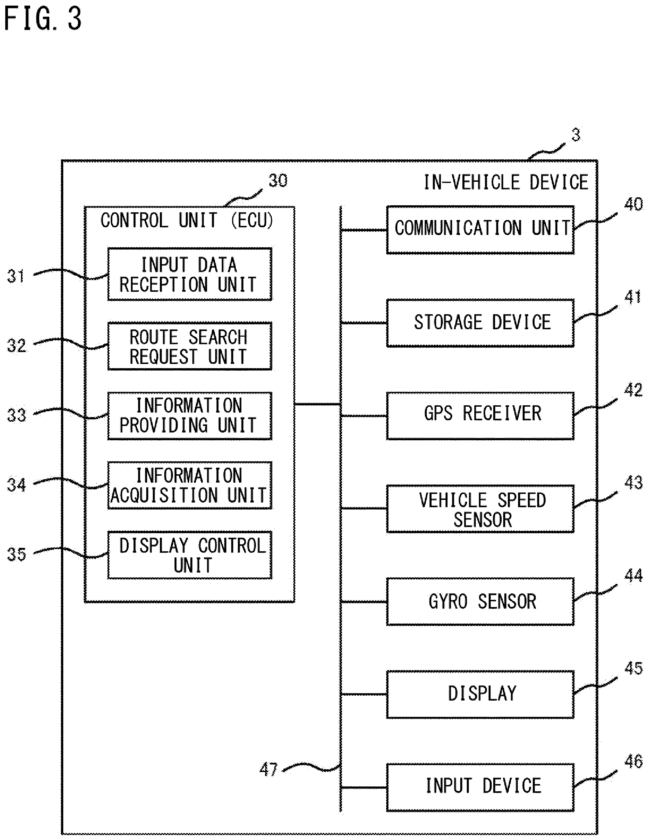

FIG. 3 is a block diagram showing an example of the configuration of the in-vehicle device 3 according to the present disclosure.

As shown in FIG. 3, the in-vehicle device 3 of the target vehicle 2 includes a control unit (ECU: Electronic Control Unit) 30, a communication unit 40, a storage device 41, a GPS (Global Positioning System) receiver 42, a vehicle speed sensor 43, a gyro sensor 44, a display 45, and an input device 46. These components are connected to each other through a bus 47. The bus 47 is implemented as, for example, an in-vehicle communication network such as the CAN (Controller Area Network) or the Ethernet (Registered Trademark).

The communication unit 40 is implemented as a wireless communication device capable of performing a 5G-supporting communication process. The communication unit 40 may be a wireless communication device already installed in the target vehicle 2, or may be a portable terminal such as a smartphone carried by an occupant in the target vehicle 2.

The storage device 41 is implemented as a volatile memory element such as an SRAM or a DRAM, a non-volatile memory element such as a flash memory or an EEPROM, a magnetic storage device such as a hard disk, or the like. The storage device 41 stores therein computer programs to be executed in the control unit 30, data generated during execution of the computer programs in the control unit 30, and the like. The storage device 41 further stores therein a map database. The map database includes road map data.

The GPS receiver 42, the vehicle speed sensor 43, and the gyro sensor 44 are sensors that measure the present position, speed, and orientation of the target vehicle 2.

The display 45 is an output device for notifying the user, who is the occupant of the in-vehicle device 3, of various types of information generated by the control unit 30. Specifically, the display 45 displays an input screen to be used in route search, a map image around the vehicle 2, route information up to the arrival point, travel energy information, power consumption rate information, and the like.

The input device 46 is a device with which the occupant of the target vehicle 2 performs various input operations. The input device 46 is composed of an operation switch and a joystick provided at the steering wheel, a touch panel provided at the display 45, and the like.

The control unit 30 includes an input data reception unit 31, a route search request unit 32, an information providing unit 33, an information acquisition unit 34, and a display control unit 35 as functional processing units that are realized by executing the computer programs stored in the storage device 41.

The input data reception unit 31 receives various kinds of input data. The input data includes information indicating, for example, the arrival point of the target vehicle 2, the number of occupants of the target vehicle 2, and the load capacity of the target vehicle 2 which are inputted by the occupant of the target vehicle 2 through the input device 46. Moreover, the input data includes information on the driver of the target vehicle 2. The occupant of the target vehicle 2 may input the driver information by using the input device 46. The driver information may be associated with identification information of a smart key, and the input data reception unit 31 may acquire the driver information based on the identification information received from the smart key. The driver information may be identification information for identifying the driver, or may be information on the attributes of the driver (gender, age, driving proficiency, etc.).

The route search request unit 32 detects the position of the target vehicle 2 by using a GPS signal that the GPS receiver 42 regularly receives. The route search request unit 32 may also use a GPS complementary signal or a GPS reinforcing signal that is transmitted from a quasi-zenith satellite (not shown) and received by the receiver to complement the GPS signal or correct the position of the target vehicle 2. Furthermore, the route search request unit 32 complements the vehicle position and direction based on the input signals from the vehicle speed sensor 43 and the gyro sensor 44, and grasps the current position of the target vehicle 2 accurately.

The route search request unit 32 transmits a route search request to the travel energy estimation server 5 via the communication unit 40. The route search request includes information on the current position of the target vehicle 2, and information on the arrival point of the target vehicle 2 received by the input data reception unit 31.

The information providing unit 33 transmits the information on the number of occupants of the target vehicle 2, the information on the load capacity, and the driver information which are received by the input data reception unit 31, and the identification information of the target vehicle 2 (e.g., vehicle identification number, vehicle registration number, etc.) to the travel energy estimation server 5 via the communication unit 40.

The information acquisition unit 34 acquires, from the travel energy estimation server 5 via the communication unit 40, route information indicating the travel route of the target vehicle 2 to the arrival point, which is calculated in response to the route search request transmitted from the route search request unit 32 to the travel energy estimation server 5. In addition, the information acquisition unit 34 acquires, from the travel energy estimation server 5 via the communication unit 40, information on travel energy to be consumed if the target vehicle 2 travels on the travel route, and information on a power consumption rate.

The display control unit 37 causes the display 45 to display the route information, the travel energy information, and the power consumption rate information acquired by the information acquisition unit 34.

[Configuration of travel energy estimation server 5]

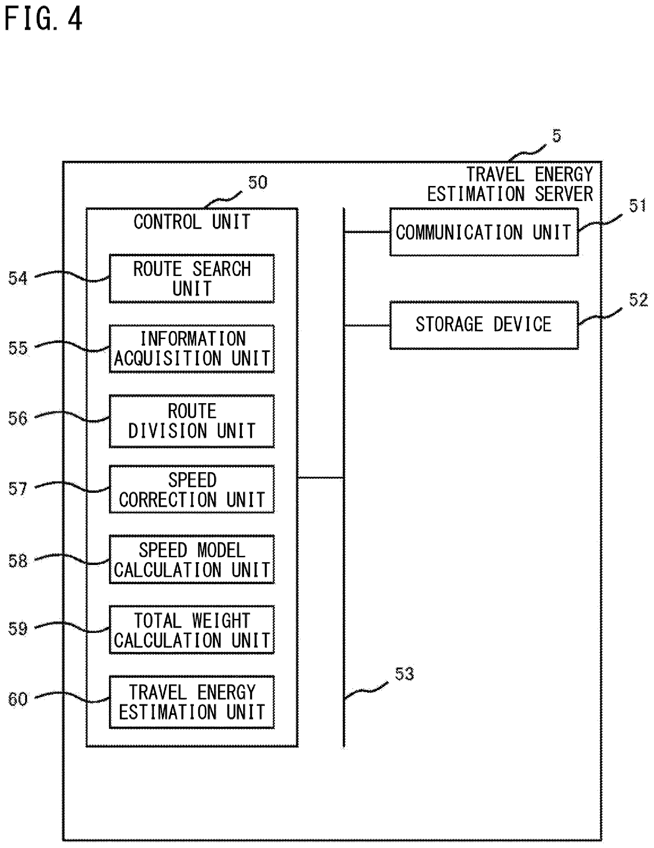

FIG. 4 is a block diagram showing an example of the configuration of the travel energy estimation server 5 according to the embodiment of the present disclosure.

As shown in FIG. 4, the travel energy estimation server 5 includes a control unit 50 as a processor including a CPU, etc., a communication unit 51, and a storage device 52. The control unit 50, the communication unit 51, and the storage device 52 are connected to each other via a bus 53.

The communication unit 51 includes a communication module for performing communication with the other devices via the network 7. The communication unit 51 transmits information given from the control unit 50 to another device via the network 7, and provides the control unit 50 with information received via the network 7.

The storage device 52 is implemented as a volatile memory element such as an SRAM or a DRAM, a non-volatile memory element such as a flash memory or an EEPROM, a magnetic storage device such as a hard disk, or the like. The storage device 52 stores therein computer programs to be executed in the control unit 50, data generated during execution of the computer programs in the control unit 50, and the like. Furthermore, the storage device 52 stores therein a vehicle type information table that is a data table showing the correspondence between vehicle identification information and vehicle type information. Moreover, the storage device 52 stores therein a specific information table that is a data table indicating the correspondence between the vehicle type information and vehicle-specific information (e.g., the weight of the vehicle, air resistance coefficient of the vehicle, power consumption of a DC/DC converter connected to the battery of the vehicle, etc.). The storage device 52 also stores therein an air density table that is a data table indicating the correspondence between air temperature and air density. The storage device 52 also stores therein a map database. The map database includes road map data. The map database includes information on the gradient of each road, and information indicating a rolling resistance coefficient of the road surface. The map database also includes information indicating the type of road (local road, expressway) for each road. The map database also includes, for each of guides being points on the road (described later), information indicating a heading direction and presence/absence of a traffic signal at the guide.

The control unit 50 includes a route search unit 54, an information acquisition unit 55, a route division unit 56, a speed correction unit 57, a speed model calculation unit 58, a total weight acquisition unit 59, and a travel energy estimation unit 60, as functional processing units that are realized by reading out the computer programs stored in the storage device 52 in advance, and executing the programs.

The travel energy estimation server 5 has a function of a so-called car navigation system. The route search unit 54 receives a route search request from the in-vehicle device 3 of the target vehicle 2 via the communication unit 51. Upon receiving the route search request, the route search unit 54 searches for a travel route from the current position of the target vehicle 2 to the arrival point. A known method can be used as the route search method. For example, the route search unit 54 searches for a travel route having the minimum travel distance from the current position to the arrival point. The route search unit 54 may search for a travel route having the minimum travel distance, based on each of a plurality of conditions (e.g., whether or not an expressway is used). The route search unit 54 may search for a travel route having the minimum travel time from the current position to the arrival point. The route search unit 54 transmits route information indicating the searched travel route (hereinafter referred to as "searched route") to the target vehicle 2 and the traffic information providing server 8 via the communication unit 51. The searched route is configured as a set of one or more road links.

The information acquisition unit 55 acquires speed information indicating a predicted travel speed of the target vehicle 2 for each road section included in the searched route of the target vehicle 2, from the traffic information providing server 8 via the communication unit 51.

In addition, the information acquisition unit 55 acquires traffic condition information in the searched route of the target vehicle 2, from the traffic information providing server 8 via the communication unit 51.

Moreover, the information acquisition unit 55 acquires the information on the number of occupants of the target vehicle 2, the information on the load capacity of the target vehicle 2, the identification information of the target vehicle 2, and the driver information of the target vehicle 2, from the in-vehicle device 3 of the target vehicle 2 via the communication unit 51.

Based on a point, at which a change in the travel speed of the target vehicle 2 is predicted (hereinafter referred to as "speed change prediction point"), provided on the travel route of the target vehicle 2 searched by the route search unit 54, the route division unit 56 divides the travel route into one or more sections each being composed of one or a plurality of road links, and each including a speed change prediction point. A section including a speed change prediction point is a section delimited by the speed change point. The travel speed changes not only at a speed change prediction point but also in a section before or after a speed change prediction point.

On the upstream side of a speed change prediction point, a car navigation system generally outputs a guidance message by voice, and therefore, this point is referred to as "guide". That is, in the present disclosure, the "guide" indicates a target point at which a route guidance system such as a car navigation system notifies the driver of the target vehicle 2 of a route guidance and/or a driving operation guidance.

A guide is generated when the route search unit 54 searches for a route. For example, based on intersection type information indicating presence/absence of a traffic signal at an intersection, the type of the traffic signal, etc., the route search unit 54 determines whether or not an intersection satisfying a predetermined condition (e.g., an intersection where a specific type of traffic signal at which stop by signal light often occurs is installed) is provided at an end point of a road link (hereinafter referred to as "link end point") on the searched route, and sets the link end point where the intersection satisfying the condition is provided, as a guide. The route search unit 54 may set, as a guide, an intersection or any other points by using information other than the intersection type information. For example, the route search unit 54 may extract, as a guide, a link end point where the road type changes on the searched route, based on road type information. The route search unit 54 may extract, as a guide, a link end point where the target vehicle 2 changes the direction by an angle within a predetermined angle range, based on the map database. The route search unit 54 may set, as a guide, a link end point where the number of lanes changes, a link end point where the legal speed limit changes, a link end point where the road gradient changes, a link end point where a curve (particularly, a sharp curve) occurs, a link end point where branching occurs, a link end point where merging occurs, or the like, based on the registered information such as the map database,

Such a guide may be registered in advance in the map database that the route search unit 54 refers to when searching for a route, or may be dynamically generated based on the intersection type information, etc., as described above. Both a guide registered in the map database and a dynamically generated guide may be used as the guide.

A section between a guide and another guide located adjacent to and on the downstream side of the guide is referred to as "guide section". Of the two guides forming the guide section, the guide on the upstream side is referred to as "upstream guide", and the guide on the downstream side is referred to as "downstream guide".

The guide includes, for example, a point where a traffic signal is installed (hereinafter referred to as "traffic signal installation point") and a point where the target vehicle 2 turns right or left (hereinafter referred to as "right or left turn point"). Specifically, the right or left turn point refers to a point where the target vehicle 2 changes its direction by an angle within a predetermined angle range at a branching point or a point where the road type changes, or a point where the radius of curvature is equal to or less than a predetermined value. The guide also includes: a change point from a road where no traffic signals are installed, such as an expressway, a limited highway, or a bypass road, to a local road where traffic signals are installed; and a junction point from a certain expressway to another expressway. The guide also includes an entry point and an exit point of an expressway, and entry points and exit points of a rest area, a parking lot, an interchange, and a toll plaza. However, examples of the guide are not limited thereto. The guide may include a point where the number of lanes changes, a point where the legal speed limit changes, a point where the road gradient changes, a point where roads merge or diverge, a point where the target vehicle 2 changes its direction by an angle within a certain angle range on a single road, and a curve point where the radius of curvature is equal to or less than a predetermined value.

A guide section is composed of one or a plurality of road links. However, the positions of the end points (guides) of a guide section and the positions of link end points need not be exactly the same. Since it is conceivable that the guide section is substantially composed of one or a plurality of road links, some positional displacement is allowed.

That is, the route division unit 56 divides the travel route into guide sections each being composed of one or a plurality of road links.

The speed correction unit 57 corrects the predicted travel speed indicated by the speed information, based on the speed information and the traffic condition information acquired by the information acquisition unit 55.

For example, if the speed information indicates a typical travel speed for each road link (hereinafter referred to as "typical travel speed"), the speed correction unit 57 calculates a typical travel speed for each guide section, based on the typical travel speed for each road link.

If a single guide section is composed of a single road link, the speed correction unit 57 sets the typical travel speed of the road link as the typical travel speed of the guide section. If a single guide section is composed of a plurality of road links, the speed correction unit 57 calculates a typical travel speed of the guide section, based on the typical travel speeds of the plurality of road links. For example, an average of the typical travel speeds of the plurality of road links may be calculated as the typical travel speed of the guide section. The average may be a weighted average depending on the lengths of the road links.

Next, the speed correction unit 57 corrects the typical travel speed for each guide section, based on the traffic condition information. For example, if a traffic accident occurs in a guide section and the number of vehicle-travelable lanes is restricted, the speed correction unit 57 corrects the typical travel speed by reducing the typical travel speed of the guide section according to a predetermined rule (e.g., multiplying by a constant of 1 or less). If rain is forecasted in the guide section at the time when the target vehicle 2 is planned to travel, the speed correction unit 57 may similarly correct the typical travel speed. If an event is scheduled to be held in the vicinity of the guide section during a predetermined time period including the planned travel time of the target vehicle 2 or if a traffic jam occurs in the guide section, the speed correction unit 57 may similarly correct the typical travel speed. If the travel time in the guide section is longer than usual, the speed correction unit 57 may similarly correct the typical travel speed. If a guide section includes a steep gradient or curve, the speed correction unit 57 may similarly correct the typical travel speed according to the map database stored in the storage device 52.

The speed model calculation unit 58 calculates, for each guide section including each of the plurality of guides provided on the searched route, a speed model indicating a temporal transition of the predicted travel speed of the target vehicle 2 in the guide section. Hereinafter, a method for calculating a speed model will be specifically described for each type of guide section.

(Right or left turn model)

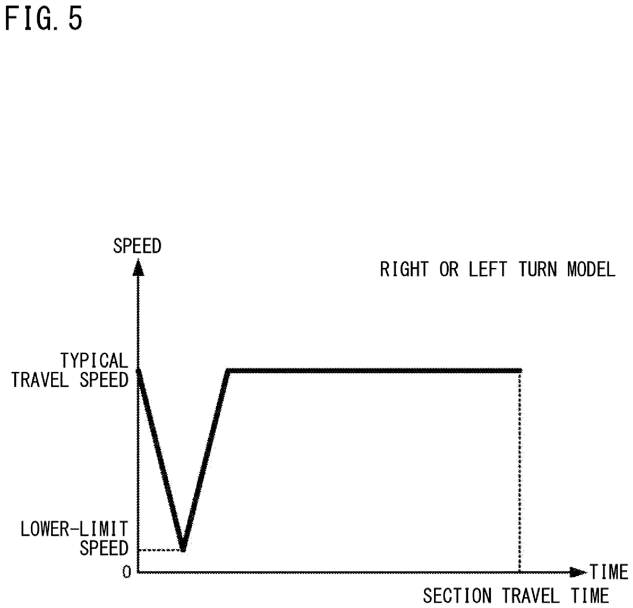

FIG. 5 shows an example of a speed model in a guide section in which an upstream guide is a right or left turn point. In FIG. 5, the horizontal axis represents time, and the vertical axis represents speed. Specifically, the speed model calculation unit 58 decreases the speed from a predetermined speed (e.g., the typical travel speed) in the guide section to a predetermined speed (predetermined lower-limit speed) at a predetermined first acceleration, increases the speed from the lower-limit speed to the predetermined speed (e.g., the typical travel speed) at a predetermined second acceleration, and maintains the typical travel speed until reaching the downstream guide, thereby creating a speed model indicating the aforementioned temporal transition of the speed. This speed model is referred to as "right or left turn model".

(Signal stop model)

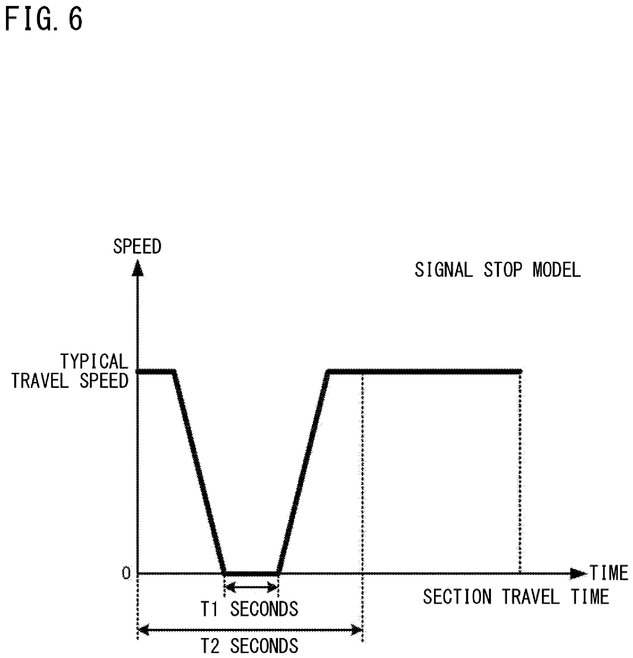

FIG. 6 shows an example of a speed model of a guide section in which an upstream guide is a traffic signal installation point. In FIG. 6, the horizontal axis represents time, and the vertical axis represents speed. Specifically, the speed model calculation unit 58 assumes that a stop time due to a red light is T1 seconds. In addition, the speed model calculation unit 58 assumes that the time required for a vehicle to pass through a traffic signal installation point is T2 seconds. The speed model calculation unit 58 decreases the speed from a predetermined speed (e.g., the typical travel speed) to a speed of 0 (stop) at a predetermined third acceleration, maintains the speed of 0 for T1 seconds, and thereafter increases the speed from the speed of 0 (stop) to a predetermined speed (e.g., the typical travel speed) at a predetermined fourth acceleration, and maintains the typical travel speed until reaching the downstream guide, thereby creating a speed model indicating the aforementioned temporal transition of the speed. This speed model is referred to as "signal stop model".

(Dedicated section model (other than last model))

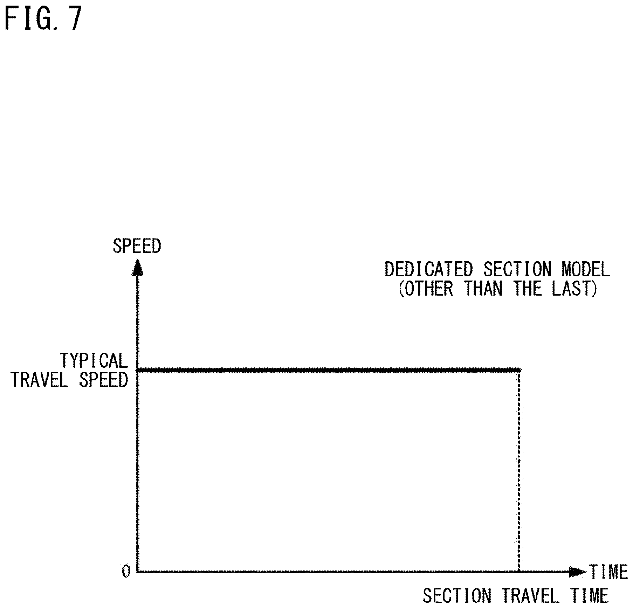

FIG. 7 shows an example of a speed model of a guide section in which an upstream guide and a downstream guide do not correspond to either a right or left turn point or a traffic signal installation point. In FIG. 7, the horizontal axis represents time, and the vertical axis represents speed. Specifically, the speed model calculation unit 58 creates a speed model indicating a temporal transition of the speed being maintained at a predetermined speed (e.g., the typical travel speed) throughout the guide section. This speed model is referred to as "dedicated section model (other than last model)". The dedicated section model (other than last model) is applied to, for example, a road section where no traffic signals are installed, such as an expressway, a limited highway, or a bypass road.

This speed model has no speed change in the guide section. However, a step occurs due to a difference between the speed at the downstream guide of the guide section adjacent to and on the upstream side of the main guide section and the typical travel speed in the main guide section, whereby a speed change is expressed. Likewise, a step occurs due to a difference between the speed at the upstream guide of the guide section adjacent to and on the downstream side of the main guide section and the typical travel speed in the main guide section, whereby a speed change is expressed. However, there may be a case where almost no speed change occurs before and after the guide throughout the process.

(Dedicated section model (last model))

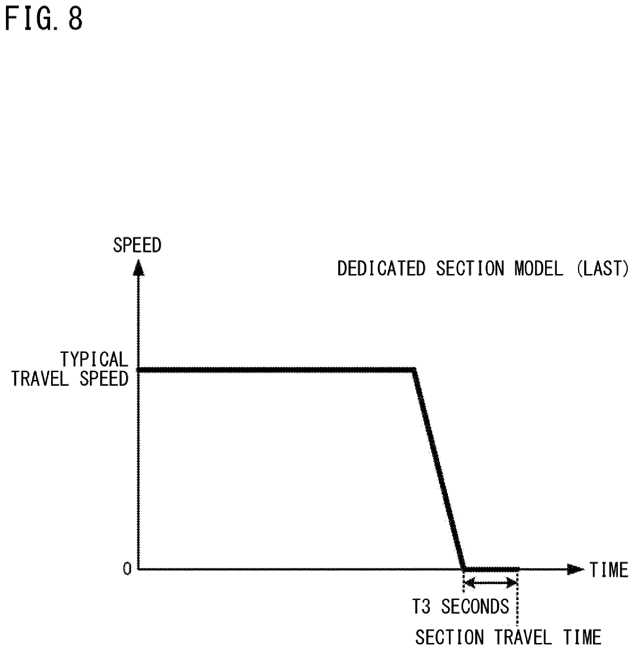

FIG. 8 shows an example of a speed model in which an upstream guide does not correspond to either a right or left turn point or a traffic signal installation point, and the downstream guide corresponds to a traffic signal installation point. In FIG. 8, the horizontal axis represents time, and the vertical axis represents speed. Specifically, the speed model calculation unit 58 maintains a predetermined speed (e.g., the typical travel speed) from the upstream guide, decreases the speed from the typical travel speed to the speed of 0 (stop) at a predetermined fifth acceleration, and maintains the state of the speed of 0 (stop) for T3 seconds, thereby creating a speed model indicating the aforementioned temporal transition of the speed. This speed model is referred to as "dedicated section model (last model)". The dedicated section model (last model) is applied to, for example, a road section in which a road where no traffic signals are installed, such as an expressway, a limited highway, or a bypass road, changes to a local road where traffic signals are installed.

Before calculating the speed model, the speed model calculation unit 58 may determine an acceleration at which the speed of the target vehicle 2 is changed, based on the driver information of the target vehicle 2 acquired by the information acquisition unit 55. The speed model calculation unit 58 calculates the speed model, based on the determined acceleration. Specifically, based on the driver information, the speed model calculation unit 58 corrects the first acceleration and the second acceleration of the right or left turn model (FIG. 5), the third acceleration and the fourth acceleration of the signal stop model (FIG. 6), and the fifth acceleration of the dedicated section model (last model) (FIG. 7). For example, if the driver's attribute is male, 20s, or with high driving proficiency, the speed model calculation unit 58 may increase, i.e., correct, the absolute value of the acceleration by multiplying the first to fifth accelerations by a predetermined coefficient that is not less than 1. If the driver's attribute is female, 60s, or with low driving proficiency, the speed model calculation unit 58 may decrease, i.e., correct, the absolute value of the acceleration by multiplying the first to fifth accelerations by a predetermined positive coefficient that is less than 1.

If a coefficient table showing the correspondence between identification information of drivers and coefficients is stored in the storage device 52 in advance, the speed model calculation unit 58 may determine a coefficient corresponding to the identification information of the driver by referring to the coefficient table, and multiply each of the first to fifth accelerations by the determined coefficient to correct the acceleration.

The speed model calculation unit 58 may combine a plurality of models of the same type or different types for one guide section, thereby creating a speed model for this section.

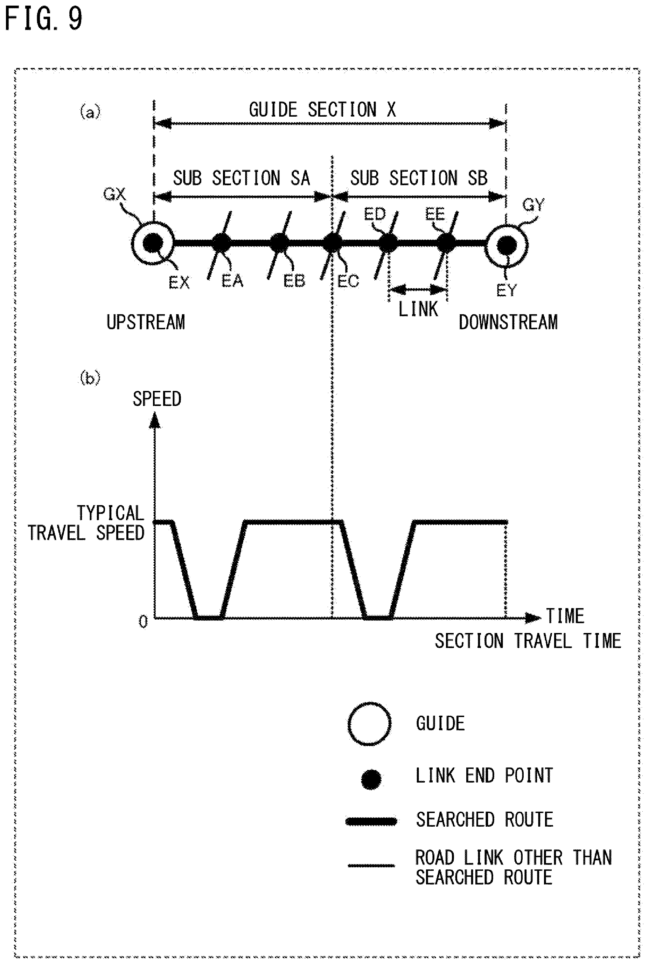

FIG. 9 illustrates an example of a procedure for creating a speed model for one guide section by combining a plurality of speed models. In FIG. 9, (a) shows the relationship between a guide section and road links, and shows an example in which a guide section is divided into a plurality of sub sections. In FIG. 9, (b) shows a created speed model.

As shown in (a) of FIG. 9, one guide section X includes link end points EX, EA, EB, EC, ED, EE, EY from the upstream side. The guide section X further includes an upstream guide GX and a downstream guide GY. The link end point EX is the upstream guide GX, and the link end point EY is the downstream guide GY. In (a) of FIG. 9, the link end points are represented by black circles, a searched route is represented by a thick solid line, and road links other than the searched route are represented by thin solid lines.

It is assumed that each of the upstream guide GX (link end point EX) and the downstream guide GY (link end point EY) is a traffic signal installation point. Each of the link end points EA, EB, EC, ED, EE is a point that is a traffic signal installation point but is not set as a guide. For example, each of the link end points EA, EB, EC, ED, EE is an intersection that does not correspond to an intersection to be set as a guide (e.g., an intersection at which a specific type of traffic signal is installed).

If the section length of the guide section X is larger than a predetermined distance threshold, the speed model calculation unit 58 divides the guide section X into sub sections. For example, the speed model calculation unit 58 divides the guide section X into an upstream sub section SA and a downstream sub section SB at the position of the link end point EC that is closest to a midpoint of the guide section X among the link end points EA, EB, EC, ED, EE. This process divides the guide section X into the sub sections SA and SB each having a section length equal to or less than the distance threshold.

As shown in (b) of FIG. 9, the speed model calculation unit 58 creates, for the guide section X, a speed model in which a plurality of (two in this case) speed models are combined. That is, the speed model calculation unit 58 creates a new speed model in which one speed model is applied to the sub section SA, and one speed model is applied to the sub section SB. Since the typical travel speed is calculated in units of guide sections, the speed model for the sub section SA and the speed model for the sub section SB have the same typical travel speed. However, in the case of combining speed models in units of sub sections, a typical travel speed may be calculated for each sub section. Thus, the travel energy can be estimated more accurately, compared to the case where the speed model of a guide section having a long distance is defined by one typical travel speed.

For example, by defining the speed model of one guide section by the speed models of a plurality of sub sections as described above, the traveling behavior of the target vehicle 2 can be expressed more accurately by a simple method. Thus, the travel energy can be highly accurately estimated.

If the section length of the sub section is larger than the distance threshold, the speed model calculation unit 58 may newly select a link end point at which the guide section X is divided into sub sections, and may divide the guide section X such that the section length of each of the finally generated sub sections becomes equal to or less than the distance threshold.

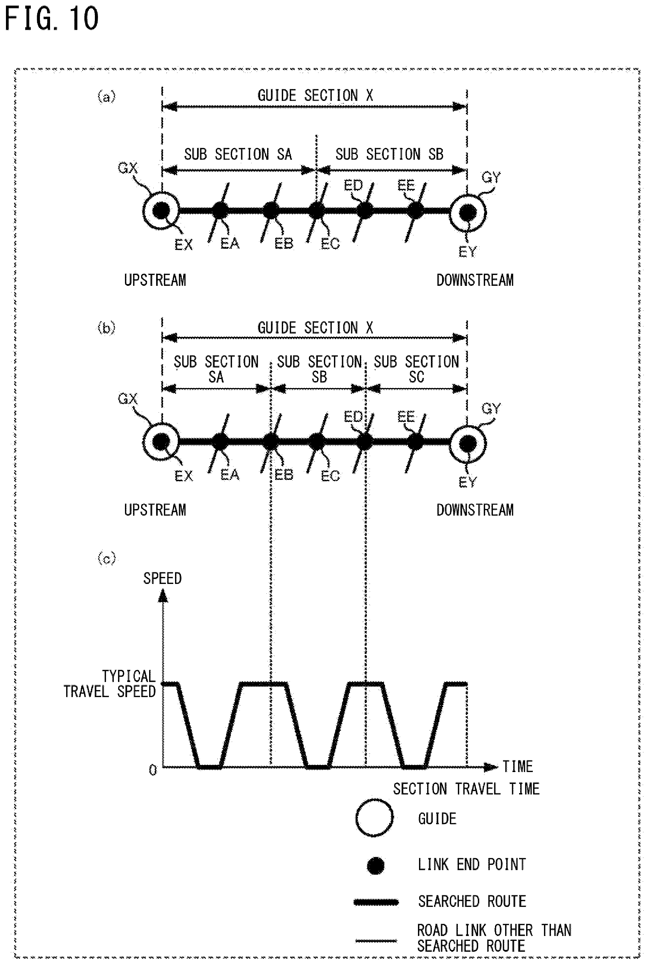

FIG. 10 illustrates an example of a procedure for creating a speed model for one guide section by combining a plurality of speed models. In FIG. 10, (a) shows the relationship between a guide section and road links, and shows an example in which a guide section is divided into a plurality of sub sections. In FIG. 10, (b) shows the relationship between a guide section and road links, and shows another example in which a guide section is divided into a plurality of sub sections. In FIG. 10, (c) shows a created speed model.

A guide section X, an upstream guide GX, a downstream guide GY, and link end points EX, EA, EB, EC, ED, EE, EY shown in (a) and (b) in FIG. 10 are identical to those shown in (a) of FIG. 9.

As shown in (a) of FIG. 10, if the section length of the guide section X is larger than a predetermined distance threshold, the speed model calculation unit 58 divides the guide section X into sub sections. For example, in a similar manner to that described with reference to (a) of FIG. 9, the speed model calculation unit 58 divides the guide section X into an upstream sub section SA and a downstream sub section SB at the position of the link end point EC that is closest to a midpoint of the guide section X among the link end points EA, EB, EC, ED, EE.

However, it is assumed that the section length of at least one of the sub section SA and the sub section SB is larger than the distance threshold. In this case, the speed model calculation unit 58 divides the guide section X into more sub sections.

For example, as shown in (b) of FIG. 10, the speed model calculation unit 58 changes the number of divisions of the guide section X from 2 to 3, and divides the guide section X into three sub sections SA, SB, SC. Specifically, the speed model calculation unit 58 selects, from among the link end points EA, EB, EC, ED, EE, link end points that are closest to two division points for dividing the guide section X into three sections such that the section lengths thereof have the same distance. Here, it is assumed that the link end points EB, ED are selected. The speed model calculation unit 58 divides the guide section X at the positions of the link end points EB, ED, thereby generating sub sections SA, SB, SC.

If the section length of at least one of the sub sections SA, SB, SC is larger than the distance threshold, the speed model calculation unit 58 increases the number of divisions of the guide section X one by one and repeats the aforementioned process until the section lengths of all the sub sections become equal to or less than the distance threshold. However, when a sub section whose section length is larger than the distance threshold is present even if the guide section X is divided at the positions of all the link end points EA, EB, EC, ED, EE, the speed model calculation unit 58 ends the process of dividing the guide section X, at that point in time.

Here, it is assumed that the section lengths of all the sub sections SA, SB, SC are equal to or less than the distance threshold. As shown in (c) of FIG. 10, the speed model calculation unit 58 creates, for the guide section X, a speed model in which a plurality of (three in this case) speed models are combined. That is, the speed model calculation unit 58 creates a new speed model in which one speed model is applied to the sub section SA, one speed model is applied to the sub section SB, and one speed model is applied to the sub section SC. Since the typical travel speed is calculated in units of guide sections, the speed models for the sub sections SA, SB, SC have the same typical travel speed. However, in the case of combining speed models in units of sub sections, a typical travel speed may be calculated for each sub section. Thus, the travel energy can be estimated more accurately, compared to the case where the speed model of a guide section having a long distance is defined by one typical travel speed.

In the example shown in FIG. 10, if the section length of a sub section is larger than the distance threshold, sub sections are newly set with the already created sub sections being ignored. However, if the section length of a sub section is larger than the distance threshold, sub sections may be newly set by utilizing the already created sub sections.

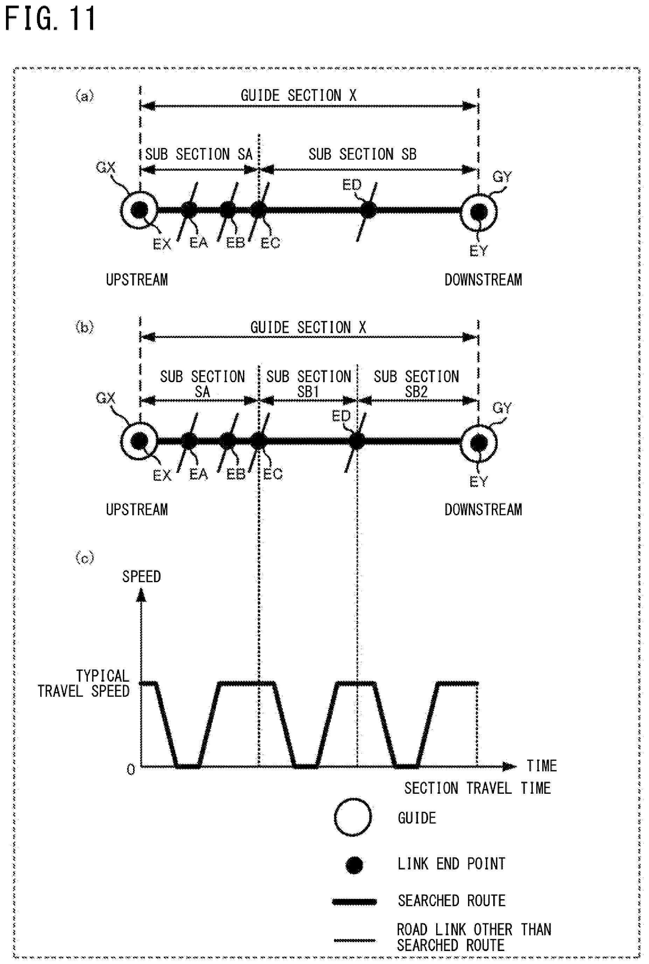

FIG. 11 illustrates an example of a procedure for creating a speed model for one guide section by combining a plurality of speed models. In FIG. 11, (a) shows the relationship between a guide section and road links, and shows an example in which a guide section is divided into a plurality of sub sections. In FIG. 11, (b) shows the relationship between a guide section and road links, and shows another example in which a guide section is divided into a plurality of sub sections. In FIG. 11, (c) shows a created speed model.

As shown in (a) of FIG. 11, one guide section X includes link end points EX, EA, EB, EC, ED, EY from the upstream side. The guide section X further includes an upstream guide GX and a downstream guide GY. The link end point EX is the upstream guide GX, and the link end point EY is the downstream guide GY. In (a) of FIG. 11, the link end points are represented by black circles, a searched route is represented by a thick solid line, and road links other than the searched route are represented by thin solid lines.

As shown in (a) of FIG. 11, if the section length of the guide section X is larger than a predetermined distance threshold, the speed model calculation unit 58 divides the guide section X into sub sections. For example, the speed model calculation unit 58 divides the guide section X into an upstream sub section SA and a downstream sub section SB at the position of the link end point EC that is closest to a midpoint of the guide section X among the link end points EA, EB, EC, ED.

Here, the section length of the sub section SA is equal to or less than the distance threshold. The section length of the sub section SB is larger than the distance threshold. In this case, the speed model calculation unit 58 determines the sub section SA as a sub section of the guide section X, and further divides the sub section SB into two sub sections. The only link end point at which the sub section SB can be divided is the link end point ED. Therefore, the speed model calculation unit 58 divides the sub section SB into a sub section SB1 and a sub section SB2 at the position of the link end point ED. If there are a plurality of link end points at which the sub section SB can be divided, the speed model calculation unit 58 may divide the sub section SB into the two sub sections at the position of a link end point closest to a midpoint of the sub section SB. Such a process is repeated until the section lengths of all the sub sections become equal to or less than the distance threshold. However, if no link end point is included in a sub section whose section length is larger than the distance threshold, the speed model calculation unit 58 ends the process of dividing this sub section, at that point in time.

Here, it is assumed that the section lengths of all the sub sections SA, SB 1, SB2 are equal to or less than the distance threshold. As shown in (c) of FIG. 11, the speed model calculation unit 58 creates, for the guide section X, a speed model in which a plurality of (three in this case) are combined. That is, the speed model calculation unit 58 creates a new speed model in which one speed model is applied to the sub section SA, one speed model is applied to the sub section SB1, and one speed model is applied to the sub section SB2. Since the typical travel speed is calculated in units of guide sections, the speed models for the sub sections SA, SB1, SB2 have the same typical travel speed. However, in the case of combining speed models in units of sub sections, a typical travel speed may be calculated for each sub section. Thus, the travel energy can be estimated more accurately, compared to the case where the speed model of a guide section having a long distance is defined by one typical travel speed.

Referring back to FIG. 4, the total weight acquisition unit 59 calculates the total weight of the target vehicle 2, based on the information on the number of occupants of the target vehicle 2, the information on the load capacity, and the identification information that are acquired from the in-vehicle device 3 by the information acquisition unit 55. Specifically, the total weight acquisition unit 59 refers to the vehicle type information table stored in the storage device 52, and specifies the vehicle type information of the target vehicle 2 from the identification information of the target vehicle 2. In addition, with reference to the specific information table stored in the storage device 52, the total weight acquisition unit 59 specifies the vehicle weight of the target vehicle 2 from the specified vehicle type information of the target vehicle 2.

The total weight acquisition unit 59 estimates the weight of occupants from the information on the number of occupants of the target vehicle 2. For example, if two adults and two children are inputted as the number of occupants, (adult weight×2+child weight×2) is estimated as the weight of occupants. Here, the adult weight and the child weight are an average weight of adults and an average weight of children that are set in advance. The adult weight and the child weight may be determined in consideration of gender or age. In this case, the information on the number of occupants includes the gender or age of each occupant, and the weight of the occupants is estimated by using the adult weight or the child weight corresponding to the gender or age.

The total weight acquisition unit 59 calculates the total weight of the target vehicle 2 by adding the weight of the occupants of the target vehicle 2 and the load capacity of the target vehicle 2 indicated by the load capacity information, to the weight of the target vehicle 2.

The total weight acquisition unit 59 may acquire the total weight of the target vehicle 2 from an external server or the in-vehicle device 3.

The travel energy estimation unit 60 estimates travel energy (power consumption) and a power consumption rate (power consumption per unit distance, i.e., identical to travel energy per unit distance) of the target vehicle 2 when the target vehicle 2 travels on the searched route.

Specifically, the travel energy estimation unit 60 refers to the vehicle type information table, and specifies the vehicle type information of the target vehicle 2 from the identification information of the target vehicle 2 indicated by the route search request. In addition, the travel energy estimation unit 60 refers to the specific information table, and specifies the vehicle-specific information of the target vehicle 2 from the vehicle type information of the target vehicle 2. The specified vehicle-specific information will be described in detail later.

Based on the vehicle-specific information of the target vehicle 2, the speed model calculated by the speed model calculation unit 58, the total weight of the target vehicle 2 calculated by the total weight acquisition unit 59, and the traffic condition information acquired by the information acquisition unit 55, the travel energy estimation unit 60 calculates travel energy RE and power consumption rate EC of the target vehicle 2 in the case where the target vehicle 2 travels on the route searched by the route search unit 54, according to the following formulae (1) to (6). Formulae (1) to (6) are merely examples. The travel energy estimation unit 60 may calculate the travel energy RE and the power consumption rate EC of the target vehicle 2 by using, instead of formulae (1) to (6), any formulae capable of calculating the travel energy RE and the power consumption rate EC of the target vehicle 2, based on the speed model calculated by the speed model calculation unit 58.

[Math. 1]

$$\mathrm{E\,C} = \mathrm{R\,E} \diagup \mathrm{D} \qquad \cdots (式1)$$

$$RE = \int_{ts}^{te} \{ (Fr + Fs + Fh + Fa) \times V \times \eta + Cp \} dt \qquad \cdots (式2)$$

$$\mathrm{F\,r} = g \times \mu \times \mathrm{W} \qquad \cdots (式3)$$

$$\mathrm{F\,s} = g \times \mathrm{W} \times \sin\theta \qquad \cdots (式4)$$

$$\mathrm{F\,h} = (1+\alpha) \times \mathrm{W} \times \frac{dV}{dt} \qquad \cdots (式5)$$

$$\mathrm{F\,a} = \frac{1}{2} \times p \times \mathrm{C\,d} \times \mathrm{A} \times V^2 \qquad \cdots (式6)$$

Here, variables and constants in formulae (1) to (6) are defined as follows.

EC: power consumption rate [Wh/km] from current position to arrival point
RE: travel energy [Wh] from current position to arrival point
D: travel distance [km] from current position to arrival point
ts: departure time at current position (travel start time)

te: arrival time at arrival point (travel end time)

Fr: rolling resistance [N]

Fs: gradient resistance [N]

Fh: acceleration resistance [N]

Fa: air resistance [N]

V: vehicle speed [m/s]

$\eta$: system transmission efficiency [%]

Cp: DC/DC converter power consumption [W]

g: gravitational acceleration [m/s$^2$]

$\mu$: road surface rolling resistance coefficient

W: total weight of vehicle [kg]

$\theta$: gradient

p: air density [kg/m$^3$]

Cd: air resistance coefficient

A: frontal resistance area [m$^2$]

$\alpha$: inertial mass

dV/dt: vehicle acceleration [m/s$^2$]

The travel distance D, the travel start time ts, and the travel end time te are obtained from the route searched by the route search unit 54.

The vehicle speed V is the predicated travel speed indicated by the speed model created by the speed model calculation unit 58.

The total weight W of vehicle is the total weight of the target vehicle 2 calculated by the total weight acquisition unit 59.

The system transmission efficiency $\eta$, the DC/DC converter power consumption Cp, the air resistance coefficient Cd, the frontal resistance area A, and the inertial mass $\alpha$ are included in the vehicle-specific information of the target vehicle 2.

The gravitational acceleration g is a constant.

The travel energy estimation unit 60 specifies the gradient $\sin\theta$ and the rolling resistance coefficient $\mu$, based on the searched route, the traffic condition information, and the map database stored in the storage device 52.

The travel energy estimation unit 60 refers to the air density table stored in the storage device 52, and estimates the air density from the temperature on the searched route of the target vehicle 2. The temperature on the searched route may be acquired from a weather server (not shown). For example, the travel energy estimation unit 60 transmits route information to the weather server via the communication unit 51. Based on the route information, the weather server specifies the temperature of the area to which the route of the target vehicle 2 belongs, and transmits the specified temperature to the travel energy estimation server 5. The travel energy estimation unit 60 receives the temperature. The temperature at the current position measured by a temperature sensor mounted on the target vehicle 2 may be used as the temperature on the searched route. The travel energy estimation unit 60 may acquire the temperature from weather information included in the traffic condition information.

The travel energy estimation unit 60 acquires the vehicle acceleration dV/dt from the speed model. For example, the travel energy estimation unit 60 acquires, as the vehicle acceleration dV/dt, the first acceleration and the second acceleration in the right or left turn model (FIG. 5), the third acceleration and the fifth acceleration in the signal stop model (FIG. 6), and the fifth acceleration in the dedicated section model (last model) (FIG. 8).

The travel energy estimation unit 60 transmits information on the estimated travel energy RE and power consumption rate EC to the in-vehicle device 3 of the target vehicle 2 via the communication unit 51.

[Processing flow of travel energy estimation system 10]

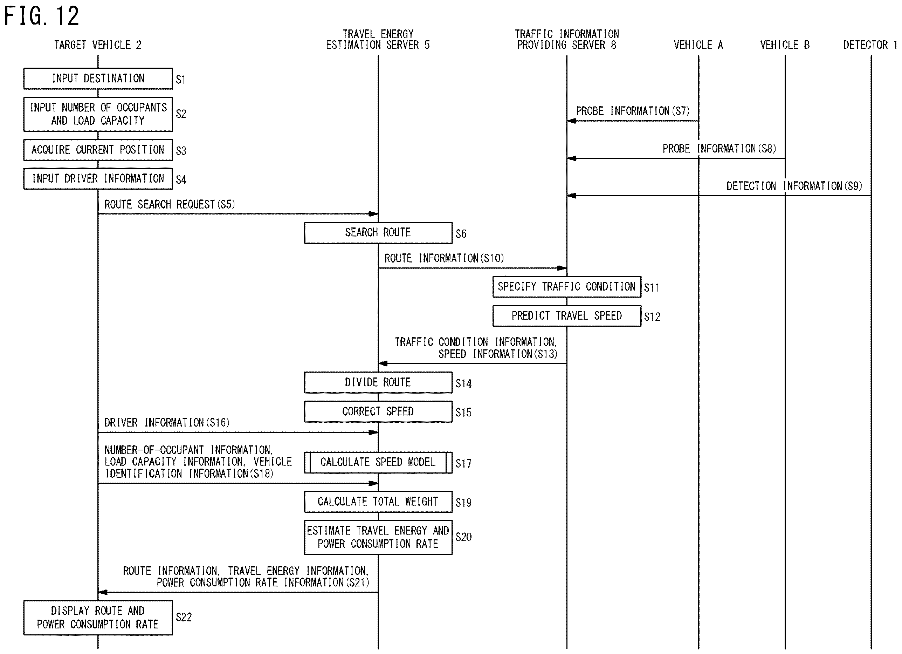

FIG. 12 is a sequence diagram showing an example of processing of the travel energy estimation system 10 according to the present disclosure.

In FIG. 12, a vehicle A and a vehicle B are shown as examples of the probe vehicle 9. However, the number of probe vehicles 9 is not limited to two. In actuality, many probe vehicles 9 exist. In FIG. 12, one detector 1 is shown. However, the number of detectors 1 is not limited to one. In actuality, many detectors 1 exist.

The in-vehicle device 3 of the target vehicle 2 (hereinafter simply referred to as "target vehicle 2") receives information on an arrival point of the target vehicle 2 inputted by an occupant of the target vehicle 2 (step S1).

The target vehicle 2 receives information indicating the number of occupants of the target vehicle 2 and the load capacity of the target vehicle 2 which are inputted by the occupant (step S2).

The target vehicle 2 obtains the position of the target vehicle 2 according to a GPS signal that the GPS receiver 42 regularly receives (step S3).

The target vehicle 2 receives information on the driver of the target vehicle 2 inputted by the occupant of the target vehicle 2 (step S4).

The target vehicle 2 transmits, to the travel energy estimation server 5, a route search request including the current position of the target vehicle 2 and the arrival point of the target vehicle 2, and the travel energy estimation server 5 receives the route search request (step S5).

Based on the route search request, the travel energy estimation server 5 searches for a travel route from the current position to the arrival point (step S6).

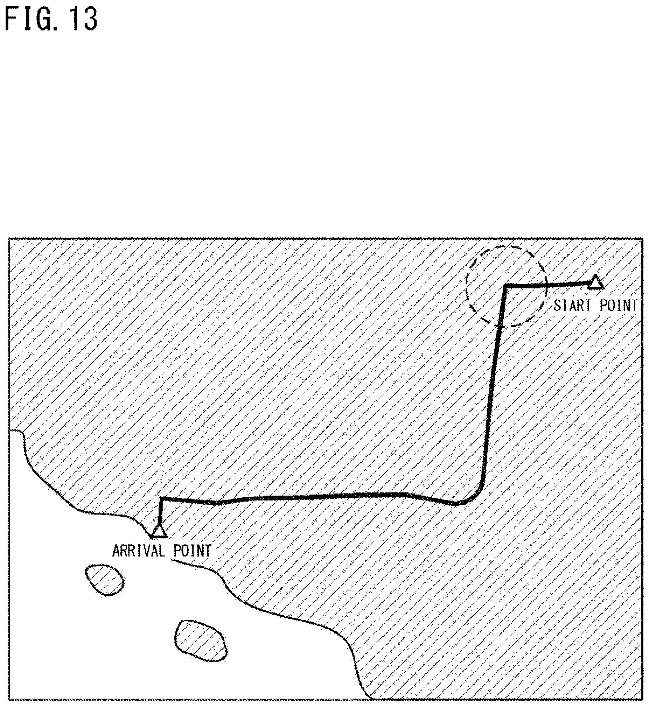

FIG. 13 shows an example of a route searched by the travel energy estimation server **5. In** FIG. 13, the searched route from a departure point (current position) to the arrival point is indicated by a solid line on a map.

Referring back to FIG. 12, the vehicle A transmits probe information to the traffic information providing server 8, and the traffic information providing server 8 receives the probe information from the vehicle A (step S7).

The vehicle B transmits probe information to the traffic information providing server 8, and the traffic information providing server 8 receives the probe information from the vehicle B (step S8). The probe information transmission process (step S7, S8) is periodically (regularly) performed.

The detector 1 regularly transmits detection information to the traffic information providing server 8, and the traffic information providing server 8 receives the detection information from the detector 1 (step S9).

The travel energy estimation server 5 transmits route information indicating the route searched in the route search process (step S6) to the traffic information providing server 8, and the traffic information providing server 8 receives the route information (step S10).

Based on the detection information received from the detector 1 and the route information received from the travel energy estimation server 5, the traffic information providing server 8 specifies traffic conditions such as details of traffic accident, traffic jam, etc., that occur on the searched route (step S11).

Based on the probe information acquired from the probe vehicles 9 including the vehicle A and the vehicle B and on the route information received from the travel energy estimation server 5, the traffic information providing server 8 predicts a typical travel speed of the probe vehicles 9 for each of road sections included in the searched route (step S12).

The traffic information providing server 8 transmits traffic condition information and speed information to the travel energy estimation server 5. The traffic condition information indicates details of traffic accidents, details of traffic jams, sudden deceleration occurrence positions, the positions of fallen objects or fallen rocks, details of traffic signals, the road shape, and traffic rules on the searched route. The speed information indicates a predicted travel speed of the target vehicle 2 for each road section on the searched route. The travel energy estimation server 5 receives the traffic condition information and the speed information from the traffic information providing server 8 (step S13).

The travel energy estimation server 5 divides the searched route into guide sections each being composed of one or a plurality of road links (step S14).

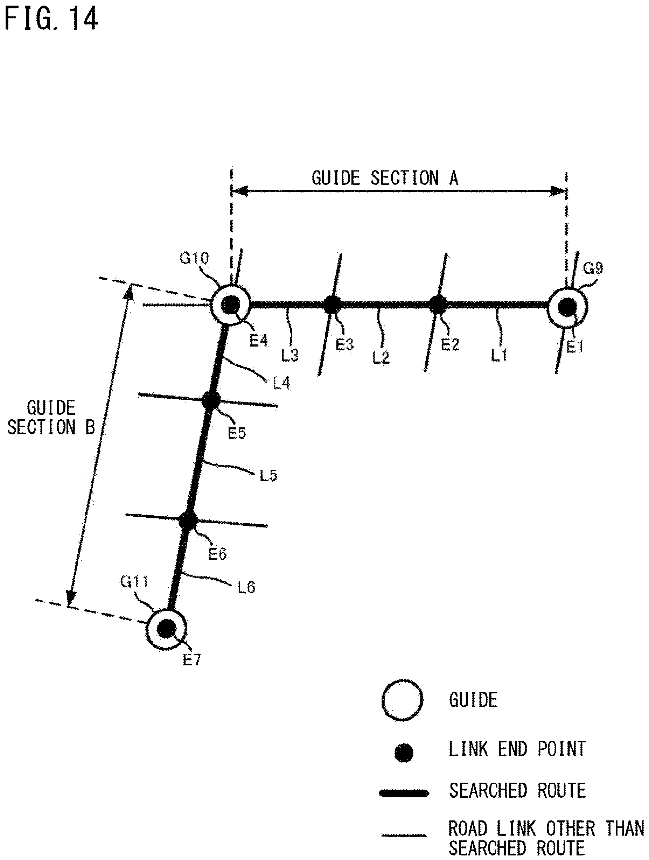

FIG. 14 shows an enlarged view of a part, surrounded by a broken line circle, of the searched route shown in FIG. 13. For example, the part of the searched route includes road links L1, L2, L3, L4, L5, L6 from the upstream side. That is, the target vehicle 2 travels through road links L1, L2, L3, L4, L5, L6 in this order. The target vehicle 2 turns left at a link end point E4 connecting the road link L3 and the road link L4. In FIG. 14, link end points are represented by black circles, the searched route is represented by a thick solid line, and road links other than the searched route are represented by thin solid lines.

The travel energy estimation server 5 determines whether or not each of the link end points E1 to E7 corresponds to a guide. The determination method is as described above. Whether or not each link end point corresponds to a guide may be determined by using information on guides included in the map database, or may be dynamically determined by using the intersection type information, etc.

Here, it is assumed that the link end point E1 on the upstream side of the road link L1, the link end point E4 connecting the road link L3 and the road link L4, and the link end point E7 on the downstream side of the road link L6 are determined to be guides.

The travel energy estimation server 5 determines sections that are delimited by the determined guides to be guide sections, thereby dividing the searched route into the guide sections. Through this process, for example, a section composed of the road links L1 to L3 is determined to be a guide section A, and a section composed of the road links L4 to L6 is determined to be a guide section B. An upstream guide of the guide section A, a downstream guide of the guide section A (an upstream guide of the guide section B), and a downstream guide of the guide section B are referred to as a guide G9, a guide G10, and a guide G11, respectively.

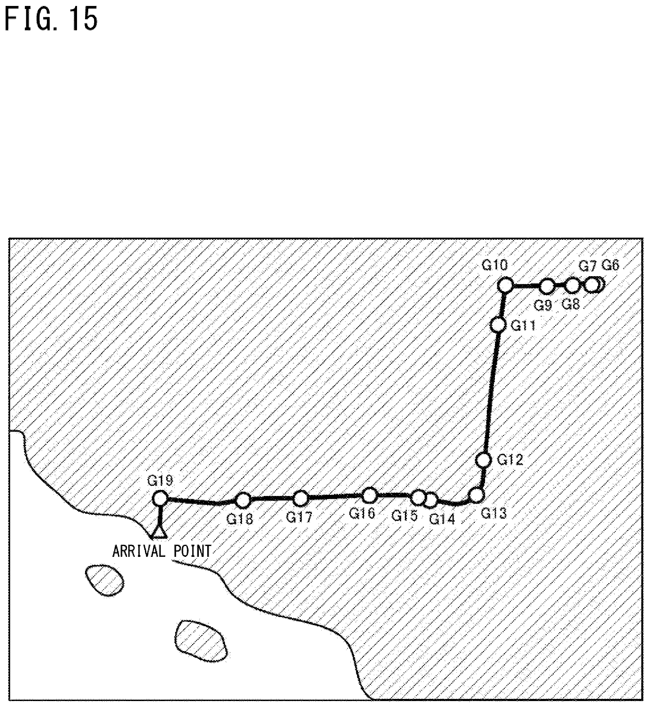

FIG. 15 shows an example of guides that are set on the searched route through the guide section division process. In FIG. 15, the guides set on the searched route shown in FIG. 13 are represented by while circles with guide numbers. That is, FIG. 15 shows that the target vehicle 2 passes through the guides G6 to G19 while traveling on the searched route toward the arrival point.

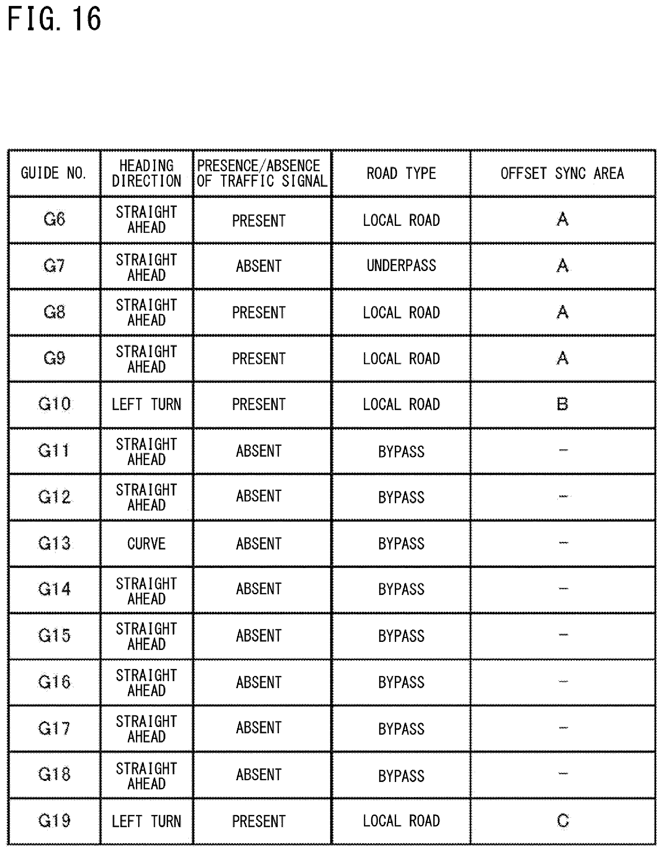

FIG. 16 shows data of guide sections generated by the guide section division process. The data shown in FIG. 16 indicate, for each guide on the searched route, heading direction, presence/absence of traffic signal, road type, and offset sync area. The heading direction indicates the heading direction of the target vehicle 2 at the guide. The presence/absence of traffic signal indicates presence/absence of a traffic signal at the guide. The road type indicates the road type of the guide section. The offset sync area indicates a set of guide sections (a set of traffic signals) where offsets of traffic signals are synchronized.

The heading direction, the presence/absence of traffic signal, and the road type are generated by referring to, for example, the map information included in the map database. The offset sync area is generated by referring to, for example, the intersection type information if information on traffic signals whose signal light indications are synchronized is included in the intersection type information.

For example, the heading direction at the guide G6 is straight ahead, a traffic signal is installed at the guide, and the road type of the guide section from the guide G6 to the guide G7 is a local road. The heading direction at the guide G7 is straight ahead, no traffic signal is installed at this guide, and the road type of the guide section from the guide G7 to the guide G8 is an underpass. The offsets of the traffic signals present on the road section from the guide G6 to the guide G9 are synchronized (offset sync area A), and are different from the offset of the traffic signal present at the guide G10 (offset sync area B).

Since a bypass section has no traffic signal installed therein, an offset sync area is not defined. However, even in a bypass section, a guide is set at a road type changing point, a right or left turn point, a road branching point such as an entrance of a parking lot or an exit of a bypass, a road merging point such as an exit of a parking lot or an entrance of a bypass, or the like. For example, the guide G11 is a guide set at a point where the road type changes from a local road to a bypass. The guide G13 is a guide set at a curve point. The guides G12 and G14 to G18 in the bypass travel section are guides set at branching points or merging points.

The travel energy estimation server 5 corrects the predicted travel speed indicated by the speed information, based on the received traffic condition information and speed information (step S15).

The target vehicle 2 transmits driver information to the travel energy estimation server 5, and the travel energy estimation server 5 receives the driver information from the target vehicle 2 (step S16).

Based on the route information, the map database, the corrected predicted travel speed, and the driver information, the travel energy estimation server 5 calculates, for each of the guide sections respectively including the guides provided on the searched route, a speed model indicating a temporal transition of the predicted travel speed of the target vehicle 2 in the guide section (step S17). The speed model calculation process (step S17) will be described in detail later.

The target vehicle 2 transmits information on the number of occupants of the target vehicle 2, load capacity information, and vehicle identification information to the travel energy estimation server 5, and the travel energy estimation server 5 receives these pieces of information (step S18).

The travel energy estimation server 5 calculates the total weight of the target vehicle 2, based on the information on the number of occupants, the load capacity information, and the vehicle identification information (step S19).

The travel energy estimation server 5 estimates travel energy and a power consumption rate of the target vehicle 2 during traveling on the searched route, based on the route information, the speed model, the traffic condition information, the identification information of the target vehicle 2, and the total weight of the target vehicle 2 (step S20).

The travel energy estimation server 5 transmits, to the target vehicle 2, the route information of the target vehicle 2 searched in the route search process (step S6), and the travel energy information and the power consumption rate information estimated in the estimation process (step S20), and the target vehicle 2 receives these pieces of information (step S21).

The target vehicle 2 displays, on the display 45, the route information, the travel energy information, and the power consumption rate information received from the travel energy estimation server 5 (step S22).

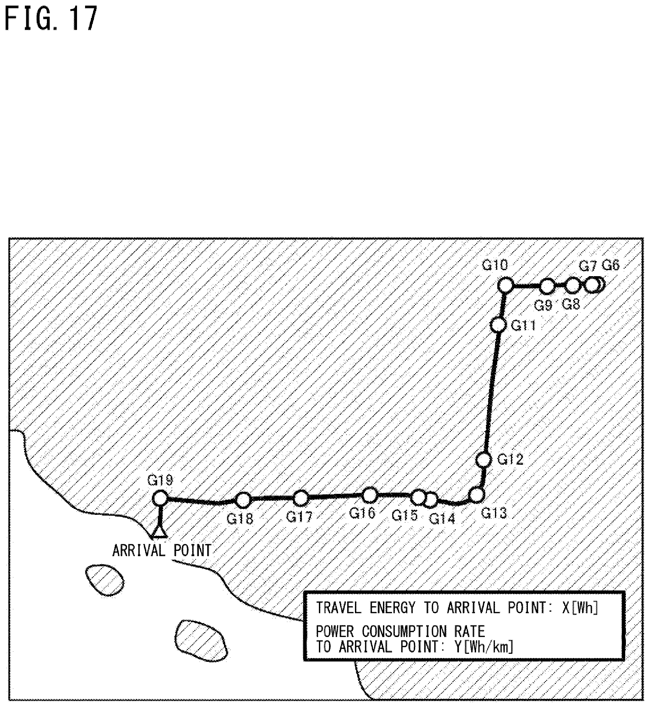

FIG. 17 shows an example of the route information, the travel energy information, and the power consumption rate information displayed on the display 45. On the display 45, the route to the arrival point through the guides G6 to G19 is displayed by a solid line, and the travel energy "X[Wh]" and the power consumption rate "Y[Wh/km]" are also displayed.

This allows the user to be notified of the searched route as shown in FIG. 15, and the travel energy information and the power consumption rate information. The travel energy estimation server 5 may calculate the travel energy and the power consumption rate for each guide section, and the target vehicle 2 may display the travel energy information and the power consumption rate information for each guide section.

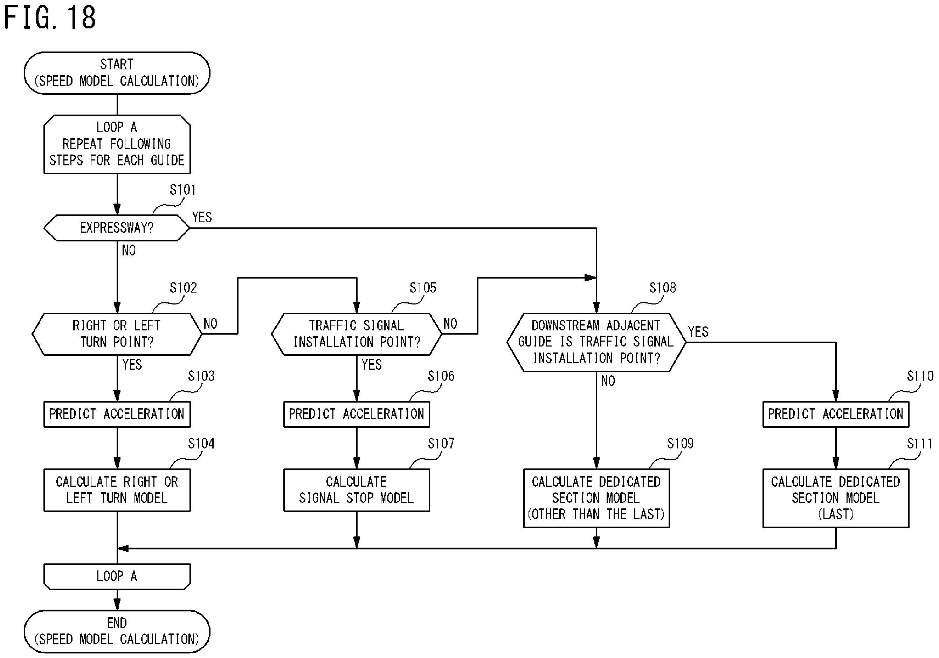

FIG. 18 is a flowchart showing the speed model calculation process (step S17 in FIG. 12) in detail. The speed model calculation process is executed by the speed model calculation unit 58 of the travel energy estimation server 5.

The travel energy estimation server 5 repeats the processes in steps S101 to S111 for each guide (loop A).

That is, the travel energy estimation server 5 determines whether or not the road type of a guide section whose upstream guide is a guide of interest is an expressway (step S101).

If the road type is not an expressway (NO in step S101), the travel energy estimation server 5 determines whether or not the guide is a right or left turn point (step S 102). That is, the travel energy estimation server 5 determines that the guide is a right or left turn point when a traffic signal is not installed at the guide and the heading direction is left turn or right turn.

When the guide has been determined to be a right or left turn point (YES in step S102), the travel energy estimation server 5 predicts the first acceleration and the second acceleration in the right or left turn model shown in FIG. 5, based on the driver information (step S103). For example, as described above, the travel energy estimation server 5 multiplies the predetermined first acceleration and second acceleration by a coefficient based on the driver information, thereby predicting the first acceleration and the second acceleration.

The travel energy estimation server 5 calculates the right or left turn model shown in FIG. 5 by using the predicted first acceleration and second acceleration (step S104). For example, the speed model of a guide section whose upstream guide is the guide G10 is the right or left turn model.

If the guide is determined not to be a right or left turn point (NO in step S102), the travel energy estimation server 5 determines whether or not the guide is a traffic signal installation point (step S105).

When the guide has been determined to be a traffic signal installation point (YES in step S105), the travel energy estimation server 5 predicts the third acceleration and the fourth acceleration in the signal stop model shown in FIG. 6, based on the driver information (step S106). For example, as described above, the travel energy estimation server 5 multiplies the predetermined third acceleration and fourth acceleration by a coefficient based on the driver information, thereby predicting the third acceleration and the fourth acceleration.

The travel energy estimation server 5 calculates the signal stop model shown in FIG. 6 by using the predicted third acceleration and fourth acceleration (step S107). For example, the speed model of a guide section whose upstream guide is the guide G6 is the signal stop model.

If the guide is neither a right or left turn point nor a traffic signal installation point (NO in step S105), or if the road type corresponding to the guide is an expressway (YES in step S101), the travel energy estimation server 5 determines whether or not a guide that is downstream of and adjacent to the guide is a traffic signal installation point (step S108).

If the adjacent guide is not a traffic signal installation point (NO in step S108), the traffic information providing server 8 calculates the dedicated section model (other than last model) shown in FIG. 7 (step S109). For example, the speed model of a guide section whose upstream guide is the guide G11 is the dedicated section model (other than last model).

If the adjacent guide is a traffic signal installation point (YES in step S108), the traffic information providing server 8 predicts the fifth acceleration in the dedicated section model (last model) shown in FIG. 8 (step S110). For example, as described above, the travel energy estimation server 5 multiples the predetermined fifth acceleration by a coefficient based on the driver information, thereby predicting the fifth acceleration.

The travel energy estimation server 5 calculates the dedicated section model (last model) shown in FIG. 8 by using the predicted fifth acceleration (step S111). For example, the speed model of a guide section whose upstream guide is the guide G18 is the dedicated section model (last model).

The travel energy estimation server 5 may predict whether or not the target vehicle 2 will stop at a traffic signal installation point, based on information on the offset sync area, and set the traffic signal installation point to a right or left turn point or the other point, based on the prediction result. For example, based on the cycles and offsets of traffic signals installed in the offset sync area A and on the predicted travel time in the offset sync area A, the travel energy estimation server 5 predicts a traffic signal installation point, in the offset sync area A, where the target vehicle 2 will stop at a red light. For example, if one cycle period of red light is included in the predicted travel time of the offset sync area A, the travel energy estimation server 5 predicts that the target vehicle 2 will stop at a red light in one traffic signal installation point that is selected at random from the offset sync area A, and predicts that the target vehicle 2 will not stop at a red light in the other traffic signal installation points included in the offset sync area A.

If the heading direction at a traffic signal installation point other than the traffic signal installation point where the target vehicle 2 is predicted to stop at a red light is right turn or left turn, the travel energy estimation server 5 sets this point to a right or left turn point. If the heading direction at a traffic signal installation point other than the traffic signal installation point where the target vehicle 2 is predicted to stop at a red light is straight ahead, the travel energy estimation server 5 determines that this point is neither a right or left turn point nor a traffic signal installation point. Then, the travel energy estimation server 5 executes the process shown in FIG. 18, and calculates the speed model.

[Example of comparison between speed model and actual travel speed]

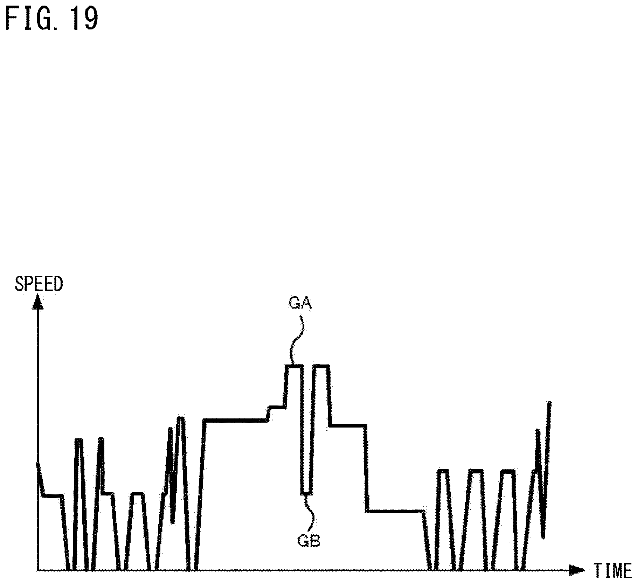

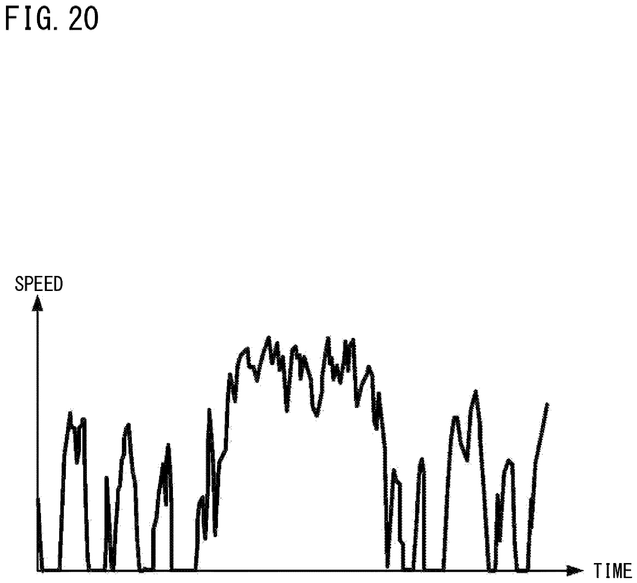

FIG. 19 shows a speed change based on a speed model, calculated by the travel energy estimation server 5, of the target vehicle 2 during traveling on the searched route. FIG. 20 shows a speed change when the target vehicle 2 actually travels on the same searched route as that shown in FIG. 19.

In FIG. 19 and FIG. 20, the horizontal axis represents common time, and the vertical axis represents speed. For example, in FIG. 19, a travel model GA and a travel model GB each being a dedicated section model (other than last model) having a constant travel speed, are continuously arranged. This indicates that the target vehicle 2 is traveling on a bypass.

However, the speed of the travel model GB is significantly lower than the speed of the travel model GA, and the speed is changed stepwise in the travel model GA and the travel model GB. This indicates that the target vehicle 2 is decelerated due to a curve at the guide G13 corresponding to the travel model GB.

As shown in FIG. 19 and FIG. 20, the speed change of the target vehicle 2 indicated by the speed model and the actual speed change of the target vehicle 2 are similar to each other from an overall view. Since the travel energy estimation server 5 expresses the modeled travel speed of the target vehicle 2, the magnitude of a numerical value or the like may locally differ from the actual one. However, the speed model created as described above allows presence/absence of acceleration or deceleration that is dominant in energy consumption to be reproduced with a relatively high accuracy, in a more concise manner. As a result, the estimated value of the travel energy is similar to the actual value from an overall view. Thus, according to the present disclosure, estimation of highly accurate travel energy can be performed through a relatively simple process.

[Effects and the like of embodiment]

As described above, according to the embodiment of the present disclosure, a searched route is divided into one or more sections each being composed of one or a plurality of road links, on the basis of guides that are speed change prediction points. Therefore, the guide section length is ensured to be always equal to or larger than the road link length, and each guide section can be configured to include a speed change prediction point. Therefore, the search route need not be divided more than necessary, and can be divided into guide sections in which the travel energy can be highly accurately estimated. In addition, the speed model is provided for each guide section including a speed change prediction point (guide) of the target vehicle 2. Therefore, an event of a speed change such as acceleration or deceleration of the target vehicle 2, which occurs in the guide, can be reflected in the speed model. Since the travel energy is estimated based on the speed model in which the event of the speed change is reflected, it is possible to highly accurately estimate the travel energy of the target vehicle 2 being an electric vehicle during traveling on the route.

A route guidance system such as a car navigation system usually performs, for the driver, guidance (notification) about a point where the speed of the vehicle is expected to change, upstream of the point by voice or the like. Therefore, dividing the route into sections such that each section includes such a point (guide) allows highly accurate estimation of the travel energy of the target vehicle 2 during traveling on the route.

At a traffic signal installation point, events such as deceleration, stop, and acceleration of the target vehicle 2 continuously occur. Therefore, using the speed model (the signal stop model shown in FIG. 6) obtained by modeling such events allows highly accurate estimation of the travel energy.

The signal stop model is obtained by generalizing and modeling an event of a speed change of the target vehicle 2 in a guide section including a guide at which a traffic signal is installed. Therefore, the travel energy can be estimated by a simple method.

The speed model is calculated by using, for example, a typical travel speed statistically calculated, such as an average speed of vehicles traveling in a guide section or a road link. Therefore, a speed model based on an actual travel speed can be calculated, whereby the travel energy can be highly accurately estimated.

Each of the speeds used for calculating the speed model is corrected based on the regulation information (e.g., traffic condition information). Therefore, the speed model can be calculated in consideration of the regulation information, whereby the travel energy can be highly accurately estimated.

In a plurality of guide sections respectively including a plurality of traffic signal installation points at which signal light indications of traffic signals are synchronized (e.g., offsets of signal light indications are synchronized), a guide section including a point at which stopping due to a red light is expected can be determined based on parameters (cycles and offsets of the traffic signals) that define signal light indications. Therefore, it is possible to predict an installation point of a traffic signal at which the target vehicle 2 is expected to stop, among the plurality of traffic signals whose signal light indications are synchronized. Therefore, only for a traffic signal installation point at which the target vehicle 2 is expected to stop, a speed model in which the target vehicle 2 stops at this point can be calculated, while for a traffic signal installation point at which the target vehicle 2 is not expected to stop, a speed model in which the target vehicle 2 passes this point without stopping can be calculated. Thus, the travel energy can be highly accurately estimated.

At a right or left turn point, events such as deceleration and acceleration of the target vehicle 2 continuously occur. Therefore, using the speed model (right or left turn model shown in FIG. 5) obtained by modeling such events allows highly accurate estimation of the travel energy.

The right or left turn model is obtained by generalizing and modeling an event of a speed change of the target vehicle 2 in a guide section including a right or left turn point. Therefore, the travel energy can be estimated by a simple method.

It is possible to generalize and model an event such as a change in travel speed in a guide section including a point at which attention needs to be paid during traveling through the point, which is likely to affect traveling of the target vehicle 2, and at which a sudden acceleration or deceleration is highly likely to occur when the target vehicle 2 passes (e.g.,

a point at which the road type changes, a road merging point, a road branching point, etc.) (refer to the dedicated section model (other than last model) shown in FIG. 7, and the dedicated section model (last model) shown in FIG. 8). Therefore, the travel energy can be estimated by a simple method.

When the target vehicle 2 stops due to a traffic signal at an end of a guide section, deceleration and stop of the target vehicle 2 continuously occur. Therefore, an event of a speed change of the target vehicle 2 in this guide section can be generalized and modeled (dedicated section model (last model) shown in FIG. 8). Therefore, the travel energy can be estimated by a simple method.

The regulation information includes at least one of information on an event to be held during traveling of the target vehicle 2, information that regulates traveling on roads, weather information, traffic jam information, travel time information, and map information. Therefore, it is possible to correct each speed in calculating a speed model, taking into consideration the various kinds of specific regulation information. Therefore, a more accurate speed model can be calculated.

Since the number of accelerations, decelerations, or stops, the travel speed, and the like differ between a local road and an expressway, the speed model can be calculated in consideration of them.

Since no traffic signals exist on an expressway, the travel energy can be highly accurately estimated by calculating the dedicated section model (other than last model) shown in FIG. 7.

Since traffic signal installation points, right or left turn points, and all the other points exist on a local road, the travel energy can be highly accurately estimated by calculating the speed model with any of these points being assumed.

The acceleration in changing the speed model is determined based on the driver information. A driver who is cautious in driving generally drives at a low acceleration without frequent sudden accelerations and decelerations. Thus, accelerations at stop and start of the target vehicle 2 vary among drivers. Calculating a speed model based on the acceleration according to the driver's characteristics allows the travel energy to be highly accurately estimated for each driver.

A searched route is calculated as a route that minimizes the travel distance of the target vehicle 2. Therefore, for example, travel energy when the target vehicle 2 travels on a route in which the travel distance from a departure point to an arrival point is minimized, can be highly accurately estimated.

The route search unit 54 of the travel energy estimation server 5 may select one route from among a plurality of routes of the target vehicle 2, based on the travel energy estimated by the travel energy estimation unit 60.

That is, if a plurality of searched routes each having the minimum travel distance depending on each of a plurality of conditions (e.g., whether or not an expressway is used) are obtained, if a predetermined number of searched routes in order from one having the minimum travel distance are obtained, or if a plurality of searched routes are obtained based on another standard (e.g., putting priority on travel time), the route search unit 54 may select, from the plurality of searched routes, one searched route (e.g., a searched route having the minimum travel energy) based on the travel energy estimated by the travel energy estimation unit 60. The user may select a searched route. For example, a route having the minimum travel energy does not always have the minimum travel time. Therefore, the user may compare and examine the travel time and the travel energy to select a route having the minimum travel energy within an allowable travel time.

As described above, it is possible to select, from among a plurality of routes, a route having the minimum travel energy from a departure point to an arrival point, as a travel route of a target vehicle. This allows the target vehicle to travel in an environmentally friendly manner.

As described above, the travel energy is at least one of travel energy (power consumption) itself, and travel energy (power consumption) per unit distance.

Considering the heading direction of the target vehicle and presence/absence of a traffic signal at a speed change prediction point, the speed model calculation unit 58 can acquire an appropriate speed model for each guide section composed of one or a plurality of road links. For example, at a point where a traffic signal is installed, the speed model calculation unit 58 can acquire a speed model obtained by modeling a speed change caused by stopping due to the traffic signal. At a point where a traffic signal is not installed but the heading direction changes, the speed model calculation unit 58 can acquire a speed model obtained by modeling a speed change due to the change in the heading direction.

The present inventors have found that, when travel energy is estimated by using guide sections, the heading direction and presence/absence of traffic signals are important in selecting a speed model. That is, according to the embodiment of the present disclosure, the speed of the target vehicle can be modeled as a speed model in units of guide sections each having one or more road links. Therefore, for example, even if the target vehicle is traveling in an area where short-distance road links are continuously connected, such as an urban area, it is possible to estimate the travel energy in units of distances at which acceleration or deceleration that has the greatest influence on the travel energy occurs. That is, the travel energy can be estimated using the units of sections (units of distances) that are not excessively subdivided. **In** addition, since the travel speed of the target vehicle is expressed by the speed model, based on the heading direction and presence/absence of traffic signals, acceleration or deceleration that has the greatest influence on the travel energy can be appropriately expressed by a simple method. Thus, the travel energy can be highly accurately estimated, based on the speed model that is modeled with less parameters.

[Modifications]

The travel energy estimation system 10 according to the embodiment of the present disclosure has been described above, but the present disclosure is not limited to the embodiment.

For example, the current position of the target vehicle 2 is a departure point of the target vehicle 2 in the above embodiment, but the user may input a departure point of the target vehicle 2.

The travel energy estimation unit 60 of the travel energy estimation server 5 estimates the vehicle acceleration based on the driver information, but this process may not necessarily be performed. That is, the travel energy estimation unit 60 may calculate the speed model by using a predetermined vehicle acceleration.

The travel energy estimation server 5 has the function of a so-called car navigation system for searching for a route to an arrival point, but the travel energy estimation server 5 may have a function of searching for a route for other purposes. Even if a route is searched for other purposes, travel energy when the target vehicle 2 travels on the searched route is similarly estimated.

[Additional notes]

Some or all of the components forming each device described above may be implemented as one or a plurality of semiconductor devices such as system LSIs.

The above-described computer program may be distributed in a state of being stored in a computer-readable non-transitory storage medium, such as an HDD, a CD-ROM, or a semiconductor memory. Alternatively, the computer program may be distributed in a state of being transmitted via electric communication lines, wireless or wired communication lines, networks represented by the Internet, data broadcasting, and the like. The above-described devices may be implemented as a plurality of computers or a plurality of processors.

Some or all of the functions of the above-described devices may be provided through cloud computing. That is, some or all of the functions of the devices may be implemented by a cloud server. At least some parts of the embodiment and the modifications described above may be combined as desired.

The embodiment disclosed herein is merely illustrative in all aspects and should not be recognized as being restrictive. The scope of the present disclosure is defined by the scope of the claims rather than the meaning described above, and is intended to include meaning equivalent to the scope of the claims and all modifications within the scope.

In the above embodiment, the travel energy estimation unit 60 may estimate at least one of the travel energy, and the travel energy (power consumption rate) per unit distance, and particularly may estimate only the power consumption rate. The reason is as follows. The unit of the power consumption rate is the travel energy (power consumption) per unit distance, and the power consumption rate is included in the travel energy in a broad sense.

## REFERENCE SIGNS LIST

| | |
|---|---|
| 1 | detector |
| 2 | target vehicle |
| 3 | in-vehicle device |
| 4 | base station |
| 5 | travel energy estimation server |
| 7 | network |
| 8 | traffic information providing server |
| 9 | probe vehicle |
| 10 | travel energy estimation system |
| 30 | control unit |
| 31 | input data reception unit |
| 32 | route search request unit |
| 33 | information providing unit |
| 34 | information acquisition unit |
| 35 | display control unit |
| 36 | power consumption rate acquisition unit |
| 37 | display control unit |
| 40 | communication unit |
| 41 | storage device |
| 42 | GPS receiver |

43    vehicle speed sensor
44    gyro sensor
45    display
46    input device
47    bus
50    control unit
51    communication unit
52    storage device
53    bus
54    route search unit (route acquisition unit)
55    information acquisition unit
56    route division unit
57    speed correction unit
58    speed model calculation unit (speed model acquisition unit)
59    total weight acquisition unit
60    travel energy estimation unit
80    control unit
81    communication unit
82    storage device
83    probe information acquisition unit
84    detection information acquisition unit
85    traffic condition specification unit
86    travel speed prediction unit
87    bus

**Claims**

1. A travel energy estimating device, comprising:

    a route acquisition unit configured to acquire a route that is composed of a road link on which a target vehicle being an electric vehicle is planned to travel;
    a route division unit configured to divide the route into one or more sections, each section including a speed change prediction point at which a change in a travel speed of the target vehicle is expected, each section being composed of one or a plurality of road links;
    a speed model acquisition unit configured to acquire a speed model for each section, the speed model indicating a temporal transition of the travel speed of the target vehicle; and
    a travel energy estimation unit configured to estimate travel energy of the target vehicle during traveling on the route, based on the speed model acquired for each section.

2. The travel energy estimating device according to claim 1, wherein
the speed change prediction point includes a target point at which a driver of the target vehicle is notified of guidance on the route.

3. The travel energy estimating device according to claim 1 or claim 2, wherein
the speed change prediction point includes a traffic signal installation point.

4. The travel energy estimating device according to claim 3, wherein
the speed model acquisition unit calculates a first speed model indicating that the target vehicle will start after stopping, in the section including a traffic signal installation point at which the target vehicle is expected to stop due to a red light.

5. The travel energy estimating device according to claim 4, wherein
the first speed model indicates that the target vehicle decelerates from a first speed to a speed of 0, maintains the speed of 0 for a predetermined time, and thereafter accelerates from the speed of 0 to a second speed.

6. The travel energy estimating device according to claim 5, wherein
at least one of the first speed and the second speed indicates a typical travel speed of vehicles traveling in the section.

7. The travel energy estimating device according to claim 5 or claim 6, further comprising a speed correction unit configured to correct at least one of the first speed and the second speed, based on regulation information that regulates traveling of the target vehicle on the route.

8. The travel energy estimating device according to any one of claims 4 to 7, wherein
the speed model acquisition unit determines, among a plurality of sections respectively including a plurality of traffic signal installation points at which signal light indications of traffic signals are synchronized, a section including a traffic signal installation point at which the target vehicle is expected to stop due to a red light, based on a parameter that defines the signal light indications.

9. The travel energy estimating device according to any one of claims 1 to 8, wherein
the speed change prediction point includes a right or left turn point at which the target vehicle turns right or left.

10. The travel energy estimating device according to claim 9, wherein
the speed model acquisition unit calculates a second speed model indicating deceleration and acceleration of the target vehicle in the section including the right or left turn point.

11. The travel energy estimating device according to claim 10, wherein
the second speed model indicates that the target vehicle decelerates from a third speed to a fourth speed, and thereafter accelerates from the fourth speed to a fifth speed.

12. The travel energy estimating device according to claim 11, wherein
at least one of the third speed and the fifth speed indicates a typical travel speed of vehicles traveling in the section.

13. The travel energy estimating device according to claim 11 or claim 12, further comprising a speed correction unit configured to correct any of the third speed, the fourth speed, and the fifth speed, based on regulation information that regulates traveling of the target vehicle on the route.

14. The travel energy estimating device according to any one of claims 1 to 12, wherein
the speed model acquisition unit calculates a third speed model including a temporal transition of speed in which the speed of the target vehicle is maintained at a sixth speed, in the section including a speed change prediction point that does not correspond to either a traffic signal installation point or a right or left turn point at which the target vehicle turns right or left.

15. The travel energy estimating device according to claim 14, wherein
in the section including the speed change prediction point that does not correspond to either the traffic signal installation point or the right or left turn point at which the target vehicle turns right or left, if an end of the section is a traffic signal installation point, the speed model acquisition unit calculates the third speed model indicating that the target vehicle stops at the end.

16. The travel energy estimating device according to claim 15, wherein
the third speed model indicates that the target vehicle decelerates from the sixth speed to the speed of 0 until reaching the end of the section, and thereafter maintains the speed of 0 for a predetermined time.

17. The travel energy estimating device according to claim 16, wherein
the sixth speed indicates a typical travel speed of vehicles traveling in the section.

18. The travel energy estimating device according to claim 17, further comprising a speed correction unit configured to correct the sixth speed, based on regulation information that regulates traveling of the target vehicle on the route.

19. The travel energy estimating device according to any one of claim 7, claim 13, and claim 18, wherein
the regulation information includes at least one of information on an event to be held during traveling of the target vehicle, information that regulates traveling on a road, weather information, traffic jam information, travel time information, and map information.

20. The travel energy estimating device according to any one of claims 1 to 10, wherein
the speed model acquisition unit calculates, for each section, the speed model according to the type of a road included in the section.

21. The travel energy estimating device according to any one of claims 14 to 19, wherein
the speed model acquisition unit calculates the third speed model in the section including an expressway.

22. The travel energy estimating device according to any one of claims 4 to 8, wherein
the speed model acquisition unit calculates the first speed model in the section including a local road.

23. The travel energy estimating device according to any one of claims 1 to 22, wherein
the speed model acquisition unit determines an acceleration at which the speed of the target vehicle is to be changed, according to a driver of the target vehicle, and acquires the speed model indicating the temporal transition of the travel speed of the target vehicle based on the determined acceleration.

24. The travel energy estimating device according to any one of claims 1 to 23, wherein
the route acquisition unit calculates a route that minimizes a travel distance of the target vehicle from a first point to a second point, as a route on which the target vehicle is planned to travel.

25. The travel energy estimating device according to any one of claims 1 to 23, wherein
the route acquisition unit selects one route from among a plurality of routes for the target vehicle from a first point to a second point, based on the travel energy estimated by the travel energy estimation unit.

26. The travel energy estimating device according to any one of claims 1 to 25, wherein
based on at least one of a heading direction of the target vehicle and presence/absence of a traffic signal at the speed change prediction point, the speed model acquisition unit acquires a speed model for the section including the speed change prediction point.

27. A travel energy estimating method, comprising:

acquiring, by a travel energy estimating device, a route that is composed of a road link on which a target vehicle being an electric vehicle is planned to travel;
dividing, by the travel energy estimating device, the route into one or more sections, each section including a speed change prediction point at which a change in a travel speed of the target vehicle is expected, each section being composed of one or a plurality of road links;
acquiring, by the travel energy estimating device, a speed model for each section, the speed model indicating a temporal transition of the travel speed of the target vehicle; and
estimating, by the travel energy estimating device, travel energy of the target vehicle during traveling on the route, based on the speed model acquired for each section.

28. A computer program that causes a computer to function as:

a route acquisition unit configured to acquire a route that is composed of a road link on which a target vehicle being an electric vehicle is planned to travel;
a route division unit configured to divide the route into one or more sections, each section including a speed change prediction point at which a change in a travel speed of the target vehicle is expected, each section being composed of one or a plurality of road links;
a speed model acquisition unit configured to acquire a speed model for each section, the speed model indicating a temporal transition of the travel speed of the target vehicle; and
a travel energy estimation unit configured to estimate travel energy of the target vehicle during traveling on the route, based on the speed model acquired for each section.

# FIG. 1

TRAFFIC INFORMATION
PROVIDING SERVER

TRAVEL ENERGY
ESTIMATION SERVER

NETWORK

# FIG. 2

FIG. 3

IN-VEHICLE DEVICE 3

CONTROL UNIT (ECU) 30

| | |
|---|---|
| INPUT DATA RECEPTION UNIT 31 | COMMUNICATION UNIT 40 |
| ROUTE SEARCH REQUEST UNIT 32 | STORAGE DEVICE 41 |
| INFORMATION PROVIDING UNIT 33 | GPS RECEIVER 42 |
| INFORMATION ACQUISITION UNIT 34 | VEHICLE SPEED SENSOR 43 |
| DISPLAY CONTROL UNIT 35 | GYRO SENSOR 44 |
| | DISPLAY 45 |
| | 47 |
| | INPUT DEVICE 46 |

# FIG. 4

5

TRAVEL ENERGY
ESTIMATION SERVER

50

CONTROL UNIT

51

COMMUNICATION UNIT

54 — ROUTE SEARCH UNIT

55 — INFORMATION ACQUISITION UNIT

52

STORAGE DEVICE

56 — ROUTE DIVISION UNIT

57 — SPEED CORRECTION UNIT

58 — SPEED MODEL CALCULATION UNIT

59 — TOTAL WEIGHT CALCULATION UNIT

53

60 — TRAVEL ENERGY ESTIMATION UNIT

# FIG. 5

SPEED

RIGHT OR LEFT TURN MODEL

TYPICAL TRAVEL SPEED

LOWER-LIMIT SPEED

0

TIME

SECTION TRAVEL TIME

FIG. 6

SPEED

SIGNAL STOP MODEL

TYPICAL
TRAVEL SPEED

0

T1 SECONDS

T2 SECONDS

TIME

SECTION TRAVEL TIME

# FIG. 7

SPEED

DEDICATED SECTION MODEL
(OTHER THAN THE LAST)

TYPICAL
TRAVEL SPEED

0

TIME

SECTION TRAVEL TIME

FIG. 8

SPEED

DEDICATED SECTION MODEL (LAST)

TYPICAL
TRAVEL SPEED

0

TIME

T3 SECONDS

SECTION TRAVEL TIME

# FIG. 9

(a)

GUIDE SECTION X

SUB SECTION SA    SUB SECTION SB

GX    ED    EE    GY

EX    EA    EB    EC    LINK    EY

UPSTREAM    DOWNSTREAM

(b)

SPEED

TYPICAL
TRAVEL SPEED

0    TIME

SECTION TRAVEL TIME

◯ GUIDE

● LINK END POINT

━━━ SEARCHED ROUTE

── ROAD LINK OTHER THAN
SEARCHED ROUTE

# FIG. 10

(a)

GUIDE SECTION X

SUB SECTION SA | SUB SECTION SB

GX

ED   EE   GY

EX   EA   EB   EC   EY

UPSTREAM   DOWNSTREAM

(b)

GUIDE SECTION X

SUB SECTION SA | SUB SECTION SB | SUB SECTION SC

GX

ED   EE   GY

EX   EA   EB   EC   EY

UPSTREAM   DOWNSTREAM

(c)

SPEED

TYPICAL TRAVEL SPEED

0   TIME

SECTION TRAVEL TIME

○   GUIDE

●   LINK END POINT

▬▬   SEARCHED ROUTE

──   ROAD LINK OTHER THAN SEARCHED ROUTE

# FIG. 11

(a)

GUIDE SECTION X

SUB SECTION SA | SUB SECTION SB

GX

ED

GY

EX    EA   EB   EC

EY

UPSTREAM                    DOWNSTREAM

(b)

GUIDE SECTION X

SUB SECTION SA | SUB SECTION SB1 | SUB SECTION SB2

GX

ED

GY

EX   EA   EB   EC

EY

UPSTREAM                    DOWNSTREAM

(c)

SPEED

TYPICAL
TRAVEL SPEED

0

TIME

SECTION TRAVEL TIME

○  GUIDE

●  LINK END POINT

──  SEARCHED ROUTE

······  ROAD LINK OTHER THAN
        SEARCHED ROUTE

# FIG. 12

FIG. 13

# FIG. 14

FIG. 15

# FIG. 16

| GUIDE NO. | HEADING DIRECTION | PRESENCE/ABSENCE OF TRAFFIC SIGNAL | ROAD TYPE | OFFSET SYNC AREA |
|---|---|---|---|---|
| G6 | STRAIGHT AHEAD | PRESENT | LOCAL ROAD | A |
| G7 | STRAIGHT AHEAD | ABSENT | UNDERPASS | A |
| G8 | STRAIGHT AHEAD | PRESENT | LOCAL ROAD | A |
| G9 | STRAIGHT AHEAD | PRESENT | LOCAL ROAD | A |
| G10 | LEFT TURN | PRESENT | LOCAL ROAD | B |
| G11 | STRAIGHT AHEAD | ABSENT | BYPASS | — |
| G12 | STRAIGHT AHEAD | ABSENT | BYPASS | — |
| G13 | CURVE | ABSENT | BYPASS | — |
| G14 | STRAIGHT AHEAD | ABSENT | BYPASS | — |
| G15 | STRAIGHT AHEAD | ABSENT | BYPASS | — |
| G16 | STRAIGHT AHEAD | ABSENT | BYPASS | — |
| G17 | STRAIGHT AHEAD | ABSENT | BYPASS | — |
| G18 | STRAIGHT AHEAD | ABSENT | BYPASS | — |
| G19 | LEFT TURN | PRESENT | LOCAL ROAD | C |

# FIG. 17

G10　G7 G6
G9　G8
G11
G12
G19　G18　G17　G16　G15　G14　G13
ARRIVAL POINT

TRAVEL ENERGY TO ARRIVAL POINT: X[Wh]

POWER CONSUMPTION RATE
TO ARRIVAL POINT: Y[Wh/km]

# FIG. 18

START
(SPEED MODEL CALCULATION)

LOOP A
REPEAT FOLLOWING
STEPS FOR EACH GUIDE

S101
EXPRESSWAY? — YES

NO

S102
RIGHT OR LEFT TURN POINT? — NO

YES

S103
PREDICT ACCELERATION

S104
CALCULATE RIGHT OR LEFT TURN MODEL

S105
TRAFFIC SIGNAL INSTALLATION POINT? — NO

YES

S106
PREDICT ACCELERATION

S107
CALCULATE SIGNAL STOP MODEL

S108
DOWNSTREAM ADJACENT GUIDE IS TRAFFIC SIGNAL INSTALLATION POINT? — YES

NO

S109
CALCULATE DEDICATED SECTION MODEL (OTHER THAN THE LAST)

S110
PREDICT ACCELERATION

S111
CALCULATE DEDICATED SECTION MODEL (LAST)

LOOP A

END
(SPEED MODEL CALCULATION)

EP 4 530 575 A1

FIG. 19

FIG. 20

## INTERNATIONAL SEARCH REPORT

| | International application No. |
|---|---|
| | **PCT/JP2023/017797** |

**A. CLASSIFICATION OF SUBJECT MATTER**

*G01C 21/26*(2006.01)i; *B60L 3/00*(2019.01)i; *B60L 15/20*(2006.01)i; *B60L 50/60*(2019.01)i; *G08G 1/01*(2006.01)i; *G08G 1/0969*(2006.01)i; *G16Y 10/40*(2020.01)i; *G16Y 20/20*(2020.01)i; *G16Y 20/30*(2020.01)i

FI: G01C21/26 A; G08G1/0969; G08G1/01 E; G08G1/01 D; B60L3/00 S; B60L15/20 J; B60L50/60; G16Y20/20; G16Y20/30; G16Y10/40

According to International Patent Classification (IPC) or to both national classification and IPC

**B. FIELDS SEARCHED**

Minimum documentation searched (classification system followed by classification symbols)

G01C21/26; B60L3/00; B60L15/20; B60L50/60; G08G1/01; G08G1/0969; G16Y10/40; G16Y20/20; G16Y20/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-183150 A (NISSAN MOTOR CO., LTD.) 06 July 2001 (2001-07-06) paragraphs [0061]-[0082], [0172]-[0200], fig. 2, 5, 6 | 1-4, 27-28 |
| Y | paragraphs [0061]-[0082], [0172]-[0200], fig. 2, 5, 6 | 5-26 |
| X | US 2022/0153272 A1 (TOYOTA MOTOR CORP.) 19 May 2022 (2022-05-19) paragraphs [0071], [0082], [0083], [0087]-[0092], fig. 7, 8 | 1, 27-28 |
| Y | JP 2015-018392 A (SUMITOMO ELECTRIC INDUSTRIES, LTD.) 29 January 2015 (2015-01-29) paragraphs [0046], [0064]-[0068], fig. 5 | 5-26 |
| Y | JP 2007-170864 A (FUJITSU TEN LTD.) 05 July 2007 (2007-07-05) paragraphs [0020]-[0091] | 8-26 |
| A | JP 2009-067350 A (AISIN AW CO., LTD.) 02 April 2009 (2009-04-02) paragraphs [0046], [0056]-[0078] | 1-28 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 July 2023** | **01 August 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**

International application No.

**PCT/JP2023/017797**

**C.     DOCUMENTS CONSIDERED TO BE RELEVANT**

| Category* | Citation of document, with indication, where appropriate, of the relevant passages | Relevant to claim No. |
|---|---|---|
| A | JP 2014-163796 A (CLARION CO., LTD.) 08 September 2014 (2014-09-08) paragraphs [0060]-[0064], [0103], [0105], [0132], [0149], [0150] | 1-28 |

Form PCT/ISA/210 (second sheet) (January 2015)

INTERNATIONAL SEARCH REPORT
Information on patent family members

International application No.

**PCT/JP2023/017797**

| Patent document cited in search report | | | Publication date (day/month/year) | Patent family member(s) | Publication date (day/month/year) |
|---|---|---|---|---|---|
| JP | 2001-183150 | A | 06 July 2001 | (Family: none) | |
| US | 2022/0153272 | A1 | 19 May 2022 | JP 2022-79906 A paragraphs [0038], [0053]-[0055], [0060]-[0064], fig. 7, 8 CN 114516320 A | |
| JP | 2015-018392 | A | 29 January 2015 | (Family: none) | |
| JP | 2007-170864 | A | 05 July 2007 | (Family: none) | |
| JP | 2009-067350 | A | 02 April 2009 | (Family: none) | |
| JP | 2014-163796 | A | 08 September 2014 | (Family: none) | |

Form PCT/ISA/210 (patent family annex) (January 2015)

**REFERENCES CITED IN THE DESCRIPTION**

**Patent documents cited in the description**

- JP 2022083504 A
- JP 2018077062 A
- JP 2014035295 A